(19) Europäisches Patentamt
European Patent Office
Office européen des brevets

(11) EP 2 696 245 B1

(12) **EUROPEAN PATENT SPECIFICATION**

(45) Date of publication and mention of the grant of the patent:
**19.08.2015 Bulletin 2015/34**

(21) Application number: **12767902.5**

(22) Date of filing: **26.03.2012**

(51) Int Cl.:
***G03G 15/02*** *(2006.01)* ***G03G 15/00*** *(2006.01)*
***G03G 15/08*** *(2006.01)* ***G03G 15/16*** *(2006.01)*

(86) International application number:
**PCT/JP2012/002065**

(87) International publication number:
**WO 2012/137438 (11.10.2012 Gazette 2012/41)**

(54) **CONDUCTIVE MEMBER, PROCESS CARTRIDGE, AND ELECTROPHOTOGRAPHIC DEVICE**

LEITFÄHIGES ELEMENT, PROZESSKARTUSCHE UND ELEKTROFOTOGRAFISCHE VORRICHTUNG

ÉLÉMENT CONDUCTEUR, CARTOUCHE DE TRAITEMENT, ET DISPOSITIF ÉLECTROPHOTOGRAPHIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2011 JP 2011082218**

(43) Date of publication of application:
**12.02.2014 Bulletin 2014/07**

(73) Proprietor: **Canon Kabushiki Kaisha**
**Tokyo 146-8501 (JP)**

(72) Inventors:
- **TSURU, Seiji**
  **Tokyo 146-8501 (JP)**
- **YAMAUCHI, Kazuhiro**
  **Tokyo 146-8501 (JP)**
- **YAMADA, Satoru**
  **Tokyo 146-8501 (JP)**
- **MURANAKA, Norifumi**
  **Tokyo 146-8501 (JP)**
- **MURANAKA, Yuka**
  **Tokyo 146-8501 (JP)**

(74) Representative: **TBK**
**Bavariaring 4-6**
**80336 München (DE)**

(56) References cited:
**EP-A2- 1 870 597**
**JP-A- 2004 133 287**
**JP-A- 2008 070 542**
**JP-A- 2009 079 120**
**JP-A- 2009 259 796**
**JP-A- 2012 037 877**
**US-A1- 2010 147 796**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 696 245 B1

## Description

### Technical Field

The present invention relates to a conductive member to be used in an electrophotographic apparatus, a process cartridge, and an electrophotographic apparatus.

### Background Art

A layer containing a polar polymer such as a butadiene rubber (BR) or a hydrin rubber and an ion conducting agent is available as an elastic layer which a conductive member to be used as a charging roller or the like in an electrophotographic apparatus has. Such elastic layer has an advantage in that partial unevenness of its electrical resistance is small as compared with that of an elastic layer whose conductivity is imparted by electron conductive particles.

On the other hand, when a high voltage is continuously applied to the conductive member having the elastic layer containing the ion conducting agent over a long time period, the ion conducting agent may gradually polarize in the elastic layer to be unevenly distributed. That is, the ion conducting agent is divided into a plus ion and a minus ion, and the ions move in directions opposite to each other. Accordingly, a portion in the elastic layer where the concentration of the ion conducting agent becomes relatively low may occur. As a result, the number of carriers contributing to ionic conduction reduces and hence the electrical resistance of the elastic layer increases over time in some cases.

To cope with such problem, PTL 1 describes that a specific quaternary ammonium salt is used as an ion conducting agent.

### Citation List

### Patent Literature

PTL 1: Japanese Patent Application Laid-Open No. 2006-189894

## Summary of Invention

### Technical Problem

According to an investigation conducted by the inventors of the present invention, a change in electrical resistance of a conductive member according to PTL 1 over time has been suppressed. However, the inventors of the present invention have acknowledged that it is necessary to additionally improve the stability over time of the electrical resistance of a conductive member to be used as a charging roller or the like in order to meet a recent demand for an additionally long lifetime of an electrophotographic apparatus.

In view of the foregoing, the present invention is directed to providing a conductive member for electrophotography whose electrical resistance hardly increases even by long-term application of a high voltage.

Further, the present invention is directed to providing an electrophotographic apparatus and a process cartridge capable of stably providing high-quality electrophotographic images.

### Solution to Problem

According to one aspect of the present invention, there is provided a conductive member for electrophotography, including: a conductive support; and a conductive elastic layer, in which: the elastic layer comprises an A-B-A type block copolymer; where A block in the A-B-A type block copolymer comprises a non-ion conducting block and B block therein comprises an ion conducting block having an ion exchange group; the A-B-A type block copolymer forms a microphase-separated structure; and the microphase-separated structure comprises a matrix phase formed of the B block, and any one of structures selected from the group consisting of a spherical structure, a cylindrical structure, and a bicontinuous structure, and the structure is formed of the

A block.

According to another aspect of the present invention, there is provided a process cartridge, which is removably mounted onto a main body of an electrophotographic apparatus, including the above-mentioned conductive member for electrophotography as at least one member selected from a charging member and a developing member.

According to further aspect of the present invention, there is provided an electrophotographic apparatus, including the above-mentioned conductive member for electrophotography as at least one member selected from a charging

member and a developing member.

## Advantageous Effects of Invention

According to the present invention, such a conductive member for electrophotography that a resistance change caused by its long-term use is suppressed can be obtained.

## Brief Description of Drawings

FIG. 1A is a schematic view of a conductive member for electrophotography of the present invention.
FIG. 1B is a schematic view of the conductive member for electrophotography of the present invention.
FIG. 1C is a schematic view of the conductive member for electrophotography of the present invention.
FIG. 1D is a schematic view of the conductive member for electrophotography of the present invention.
FIG. 2 is a schematic view of an image-forming apparatus using the conductive member for electrophotography of the present invention.
FIG. 3 is a schematic view of another image-forming apparatus using the conductive member for electrophotography of the present invention.
FIG. 4A is an explanatory diagram of a microphase-separated structure which a block copolymer can adopt, the figure being a schematic view of a microphase-separated structure in which a phase of a spherical structure is formed.
FIG. 4B is an explanatory diagram of a microphase-separated structure which the block copolymer can adopt, the figure being a schematic view of a microphase-separated structure in which a phase of a cylindrical structure is formed.
FIG. 5A is a schematic view of a microphase-separated structure, the figure being a schematic view of a microphase-separated structure in which a phase of a bicontinuous structure is formed.
FIG. 5B is a schematic view of a microphase-separated structure, the figure being a schematic view of a microphase-separated structure in which a phase of a lamellar structure is formed.
FIG. 6A is a schematic view of a method of measuring the resistance of the conductive member for electrophotography of the present invention.
FIG. 6B is a schematic view of the method of measuring the resistance of the conductive member for electrophotography of the present invention.
FIG. 7A is a schematic view of an image output pattern to be used in the evaluations of an image obtained with the conductive member for electrophotography of the present invention.
FIG. 7B is a schematic view of an image output pattern to be used in the evaluations of an image obtained with the conductive member for electrophotography of the present invention.
FIG. 7C is a schematic view of an image output pattern to be used in the evaluations of an image obtained with the conductive member for electrophotography of the present invention.
FIG. 8 is a schematic view of a process cartridge using the conductive member for electrophotography of the present invention.

## Description of Embodiments

FIG. 1A illustrates a section in a direction perpendicular to the axis of a conductive roller according to the present invention and FIG. 1B illustrates a section in the axial direction. The conductive member is formed of a conductive support 1 and an elastic layer 2 formed on its outer periphery.

<Support>

The support 1 has conductivity and supports the conductive elastic layer to be provided thereon. Metals such as iron, aluminum, titanium, copper, and nickel, and alloys thereof can be given as examples of a material for the support.

<Elastic layer>

The elastic layer 2 contains an A-B-A type block copolymer constituted of two kinds of polymer blocks, i.e., a non-ion conducting block (hereinafter referred to as "A block") and an ion conducting block having an ion exchange group (hereinafter referred to as "B block").
The block copolymer is a thermoplastic elastomer, the A block forms any structure selected from the group consisting of a spherical structure, a cylindrical structure, and a bicontinuous structure, and the B block forms a matrix

for the structure.

The A-B-A type block copolymer according to the present invention shows ionic conductivity because the copolymer has the ion exchange group in the ion conducting block. Further, the ion exchange group is directly bonded to the main chain of a molecule of the ion conducting block through a covalent bond. Accordingly, the movement of the ion exchange group in the elastic layer when a DC voltage is applied to the conductive member over a long time period is restricted, and hence an increase in electrical resistance of the conductive member over time can be suppressed.

In addition, when an ion conducting agent is added to a binder rubber such as a urethane rubber as described in PTL 1, the amount of the ion conducting material that dissolves in the binder rubber is determined by the kinds of the binder rubber and the ion conducting agent, and hence the ion conducting agent does not dissolve in more than its saturated dissolution amount. As a result, when the ion conducting agent is added in more than its saturated dissolution amount to the binder rubber, molecules of the ion conducting agent merely aggregate and hence a resistance value that can be achieved by the conductive roller is limited in some cases. On the other hand, when the A-B-A type block copolymer having, in a molecule thereof, the B block formed of a polymer block having an ion exchange group is used as a binder like the present invention, aggregation in association with an increase in its addition amount does not occur in the elastic layer.

<B block>

Specific examples of the ion exchange group which the B block according to the present invention has include a sulfonic group ($-SO_3H$), a carboxyl group, a phosphate group ($H_2PO_4-$), and a phosphite group. Of those, a sulfonic group, a phosphate group, or a carboxyl group is preferred because high conductivity can be imparted to the elastic layer. Of those, a sulfonic group is particularly suitably used.

The electrical resistance value of the elastic layer can be adjusted to fall within the range of $1\times10^2$ to $1\times10^{11}$ $\Omega\cdot cm$, which are desirable electrical resistance values upon its use in the conductive member, depending on the content of the ion exchange group bonded to the B block. The amount of the ion exchange group with respect to the ion conducting block for adjusting the electrical resistance value within the range is 10 to 30 mol%, preferably 15 to 25 mol%. The introduction amount of the ion exchange group can be easily measured by employing proton NMR.

A method of introducing the ion exchange group is as described below. For example, when the ion exchange group is a sulfonic group and the main chain of the ion conducting block is a diene-based polymer, a dichloromethane solution of the block copolymer is prepared and then sulfuric acid is added to the solution. A sulfonic group can be selectively introduced into a double bond by doing so.

In addition, to obtain a discharge characteristic satisfactory for the conductive member generally requires the formation of a stable nip between the conductive member and a body to be charged. Therefore, the A-B-A type block copolymer of the present invention needs to serve as a thermoplastic elastomer to show rubber elasticity. Accordingly, the glass transition temperature of the ion conducting block as the B block is 10°C or less, preferably 0°C or less.

Examples of the B block that satisfies the above-mentioned conditions include the following polymers: a polybutadiene, a polyisoprene, a polyethylene-butadiene, a polyethylene-propylene, a polyisobutylene, a polyacrylic acid, a maleic acid-modified polyethylene-butylene (M-PEB), a maleic acid-modified polyethylene-propylene (M-PEP), a maleic acid-modified polyethylene-ethylene-propylene (M-PEEP), and a maleic acid-modified polyisobutylene.

The B block preferably has at least one constitutional unit selected from the group consisting of constitutional units represented by the following formulae (1) to (3):

[Chem. 1]

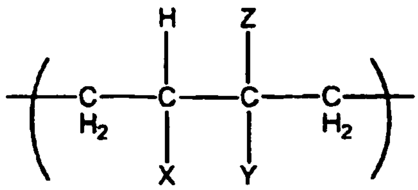
(1)

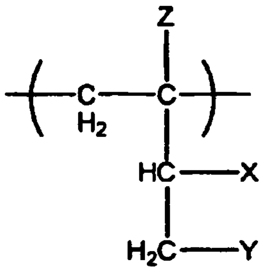
(2)

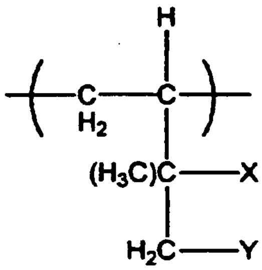
(3)

In the formulae (1) to (3), X's each independently represent a hydroxyl group (-OH) or a sulfonic group ($-SO_3H$), Y's each independently represent a hydroxyl group or a sulfonic group, and Z's each independently represent a hydrogen atom or a methyl group, provided that when X represents a sulfonic group, Y represents a hydroxyl group, and when X represents a hydroxyl group, Y represents a sulfonic group.

In addition, the B block preferably has at least one constitutional unit selected from the group consisting of constitutional units represented by the following formulae (4) to (6):

[Chem. 2]

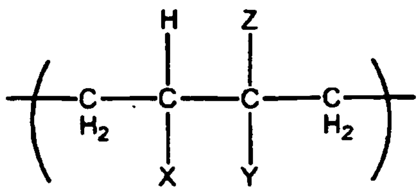

(4)

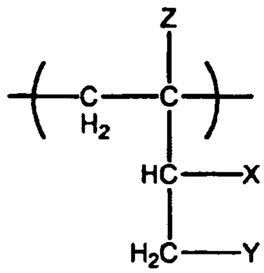

(5)

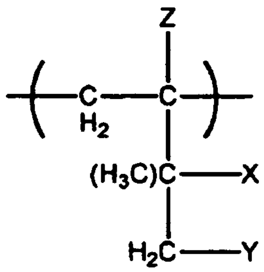

(6)

In the formulae (4) to (6), X's each independently represent a carboxyl group or a hydrogen atom, Y's each independently represent a carboxyl group or a hydrogen atom, and Z's each independently represent a hydrogen atom or a methyl group, provided that when X represents a carboxyl group, Y represents a hydrogen atom, and when X represents a hydrogen atom, Y represents a carboxyl group or a hydrogen atom.

In addition, the B block is preferably a linear polymer block having constitutional units represented by the following formula (7) and the following formula (8):

[Chem. 3]

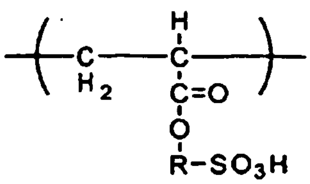

(7)

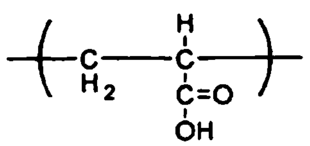

(8)

In the formula (7), R represents a divalent, saturated hydrocarbon group having 2 or more and 4 or less carbon atoms.

<A block>

The A block in the A-B-A type block copolymer according to the present invention is a non-ion conducting block. The A block serves as a crosslinking point of the thermoplastic elastomer constituted of the A-B-A type block copolymer according to the present invention. In addition, in the elastic layer according to the present invention, a phase having any one of a spherical structure, a cylindrical structure, and a bicontinuous structure, the structure being formed of the A block to serve as a crosslinking point, is microscopically dispersed in a matrix phase constituted of the B block.

Accordingly, the strength of the elastic layer increases and hence the occurrence of irreversible deformation of the elastic layer, i.e., compression set is effectively suppressed.

By the foregoing reason, the A block according to the present invention is preferably a block capable of constituting a polymer that hardly deforms even at normal temperature. Specifically, the melting point or glass transition temperature of the block is preferably higher than room temperature.

Such A block is preferably, for example, at least one constitutional unit selected from the group consisting of constitutional units represented by the following formulae (9) to (11).

[Chem. 4]

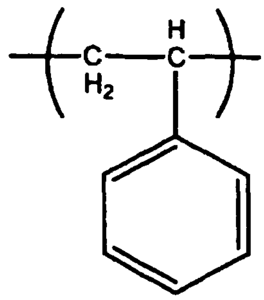

(9)

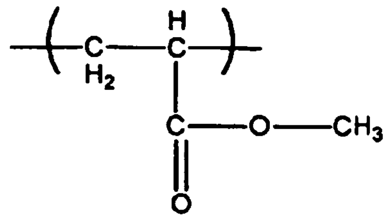

(10)

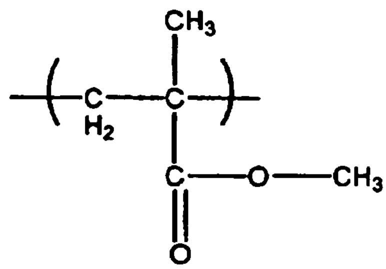

(11)

The A-B-A type block copolymer according to the present invention constituted of the A block and the B block as described above undergoes a phase separation as a result of the following. A repulsive interaction acts between the A block and the B block as dissimilar polymers, and polymer chains of the same kind agglomerate. However, the copolymer cannot produce a phase-separated structure larger than the spread of each polymer chain owing to connectivity between the dissimilar polymer chains. As a result, the copolymer produces a periodic self-assembled structure of several nanometers to several hundreds of nanometers.

Such structure is referred to as "microphase-separated structure."

Bates, F. S.; Fredrickson, G. H.; Annu. Res. Phys. Chem. 1990 (41) 525 discloses such a microphase-separated structure formed by a block copolymer as described below. In a matrix formed of one polymer block, a phase formed of the other polymer block and having a spherical structure, a cylindrical structure, a bicontinuous structure, or a lamellar structure is present. FIGS. 4A, 4B, 5A, and 5B each show a schematic view of the microphase-separated structure formed by the A-B-A type block copolymer according to the present invention. In those figures, reference numeral 41 represents a matrix phase formed of the B block and reference numeral 42 represents a phase formed of the A block. In addition, FIG. 4A illustrates such a microphase-separated structure that the phase formed of the A block has a spherical structure, and FIG. 4B illustrates such a microphase-separated structure that the phase formed of the A block has a cylindrical structure. In addition, FIG. 5A illustrates such a microphase-separated structure that the phase formed of the A block has a bicontinuous structure. Further, FIG. 5B illustrates such a microphase-separated structure that the phase formed of the A block has a lamellar structure.

It should be noted that the microphase-separated structure of the block copolymer can be identified by directly observing the structure with a transmission electron microscope (TEM) or by performing crystallography based on small-angle X-ray scattering (SAXS) measurement. In the case of, for example, the observation with the TEM, the A-B-A type block copolymer to be used in the present invention is observed as described below when a hydrophilic stain such as phosphotungstic acid is used because the B block having the ion exchange group is hydrophilic and the A block as the non-ion conducting block is hydrophobic. That is, the B block is relatively dimly observed and the A block is relatively brightly observed at the time of the observation with the TEM. Accordingly, it can be recognized that such a microphase-separated structure that the B block has a phase having any one of the spherical structure, the cylindrical structure, and the bicontinuous structure is formed, and the A block is a continuous phase.

In the elastic layer according to the present invention, the A-B-A type block copolymer constitutes a microphase-separated structure formed by the presence of the phase formed of the A block having a spherical structure, a cylindrical structure, or a spherical structure, the structure being illustrated in FIG. 4A, FIG. 4B, or FIG. 5A, in a continuous phase formed of the B block that contributes to ionic conduction. When the B block having an ion exchange group that contributes to the ionic conduction constitutes the continuous phase as described above, the elastic layer according to the present invention shows good conductivity.

The microphase-separated structures as described above can be formed by controlling a volume ratio between the A block and the B block. Specifically, the volume fraction between the A block and the B block falls within the range of a ratio "A block/B block"=10/90 to the ratio "A block/B block"=40/60, more preferably the range of the ratio "A block/B block"=15/85 to the ratio "A block/B block"=38/62.

In addition, the molecular weight of the A-B-A type block copolymer is not particularly limited under such a condition that the microphase-separated structure is formed. It should be noted that the molecular weight is desirably 10,000 or more here because the film strength of the elastic layer increases as the molecular weight becomes higher.

As the block copolymer is synthesized by a living polymerization method, the molecular weight distribution of the polymer itself is so narrow that nearly no low-molecular weight oligomer or polymer is produced and such oligomer or polymer does not contribute to a variation in electrical resistance of the elastic layer. Further, a filler, a softening agent, a processing aid, a tackifier, a dispersant, a foaming agent, or the like which has been generally used as a compounding agent for rubber can be added to the A-B-A type block copolymer of the present invention as required to such an extent that an effect of the invention is not remarkably impaired. In addition, an additional elastic layer, conductive elastic surface layer (see FIG. 1C and FIG. 1D), or protective layer can be formed on the outer periphery of the elastic layer depending on purposes.

In the present invention, the substitution amount of the ion exchange group is preferably such an amount that the volume resistivity of the elastic layer falls within a moderate resistance region (the volume resistivity is $1\times10^2$ to $1\times10^{11}$ $\Omega\cdot$cm) in each of the following three environments:

a low-temperature, low-humidity (L/L) environment (having a temperature of 15°C and a relative humidity of 10%);
a normal-temperature, normal-humidity (N/N) environment (having a temperature of 23°C and a relative humidity of 55%); and
a high-temperature, high-humidity (H/H) environment (having a temperature of 30°C and a relative humidity of 80%).

<<Method of molding elastic layer>>

A method of molding the elastic layer is, for example, a known method such as extrusion molding, injection molding, or compression molding. That is, a method involving molding the thermoplastic elastomer into an arbitrary shape through heating and cooling the elastomer to form the elastic layer is available. Alternatively, the elastic layer may be produced by directly molding the thermoplastic elastomer on the conductive support, or the conductive support may be covered with the thermoplastic elastomer molded into a tube shape. It should be noted that the shape of the elastic layer may be put in order by polishing its surface after its production.

The shape of the elastic layer is preferably such that the shape at the central portion on the electrophotographic photosensitive member side of a conductive member for electrophotography is convexed toward the electrophotographic photosensitive member side with respect to an end portion thereof in order that an abutting nip width between the resultant charging member and the electrophotographic photosensitive member may be as uniform as possible in a distribution in the lengthwise direction of the charging member. When the shape of the conductive member for electrophotography is a roller shape, such a crown shape that the diameter at the central portion of the roller is larger than the diameter at an end portion thereof is preferred. In addition, the run-out of the resultant conductive member for electrophotography is preferably as small as possible in order that the abutting nip width of the conductive member for electrophotography may be uniform.

<Electrical resistance of conductive member for electrophotography>

The electrical resistance of the conductive member for electrophotography is preferably $1\times10^4$ $\Omega$ or more in

the H/H environment, and is preferably $1\times10^8\ \Omega$ or less in the L/L environment. In addition, the electrical resistance is preferably $2\times10^4\ \Omega$ or more and $6\times10^7\ \Omega$ or less in the N/N environment. The electrical resistance in the L/L environment is preferably set to the value or less because a voltage drop in the conductive member for electrophotography is suppressed and hence the electrophotographic photosensitive member can be uniformly charged to a desired value. In addition, the resistance in the high-temperature, high-humidity environment preferably exceeds the range because even when the electrophotographic photosensitive member is shaved to expose its substrate metal, no applied current leaks and hence no density unevenness due to charging appears on a halftone image. When the conductive member for electrophotography is not of a roller shape, its resistance is represented in the unit of $\Omega/cm^2$. In that case, the resistance is determined by depositing a 1-$cm^2$ metal electrode from the vapor onto the surface of the charging member for electrophotography, applying a voltage, and measuring a current that flows as a result of the application.

(Electrophotographic apparatus)

FIG. 2 illustrates an electrophotographic image-forming apparatus using, as a charging roller 6, a charging member as one embodiment of the conductive member according to the present invention. An electrophotographic photosensitive drum 5 as an image-bearing member is subjected to primary charging by the charging roller 6 while rotating in the direction indicated by an arrow. Next, an electrostatic latent image is formed on the drum by exposure light 11 from exposing means (not shown). While a developer in a developer container 31 is charged by being rubbed between a developing roller 12 and a developing blade 30, the developing roller 12 carries the developer on its surface and then the developer is conveyed to the surface of the electrophotographic photosensitive drum 5. As a result, the electrostatic latent image is developed and hence a toner image is formed.

The toner image is transferred onto a recording medium 7 in a gap between a transfer roller 8 and the electrophotographic photosensitive drum 5, and is then fixed in a fixing portion 9. Toner remaining on the surface of the electrophotographic photosensitive member 5 without being transferred is recovered by a cleaning blade 10. Voltages are applied to, for example, the developing roller 12, the charging roller 6, and the transfer roller 8 from power supplies 18, 20, and 22 of the image-forming apparatus, respectively.

Here, a DC voltage is applied from the power supply 20 to the charging roller 6. The use of the DC voltage as an applied voltage has an advantage in that a cost for the power supply can be suppressed to a low level. In addition, the use has an advantage in that no charging sound is generated. The absolute value for the DC voltage to be applied is preferably the sum of the breakdown voltage of air and the primary charging potential of the surface of the body to be charged (the surface of the electrophotographic photosensitive member). Specifically, a primary charging voltage is preferably set to 900 to 1,500 V because the breakdown voltage of air is about 600 to 700 V and the primary charging potential of the surface of the electrophotographic photosensitive member is about 300 to 800 V in ordinary cases.

Alternatively, the electrophotographic image-forming apparatus may be a color electrophotographic image-forming apparatus provided with four colors' worth of members needed for image formation as illustrated in FIG. 3. During the movement of the recording medium 7 in the direction indicated by an arrow, toner images are transferred between an electrophotographic photosensitive drum 5d and a transfer roller 8d, between an electrophotographic photosensitive drum 5c and a transfer roller 8c, between an electrophotographic photosensitive drum 5b and a transfer roller 8b, and between an electrophotographic photosensitive drum 5a and a transfer roller 8a in the stated order. The toner images transferred onto the recording medium 7 are fixed in the fixing portion 9. Charging rollers 6a, 6b, 6c, and 6d charge the electrophotographic photosensitive drums 5a, 5b, 5c, and 5d, respectively. Four color toners, i.e., cyan, yellow, magenta, and black toners are typically used for forming a color electrophotographic image. The four color toners may be transferred onto the recording medium 7 in an arbitrary order.

(Process cartridge)

In addition, FIG. 8 is a schematic sectional view of a process cartridge obtained by applying the conductive member for electrophotography according to the present invention to the charging roller 302. As illustrated in FIG. 8, the process cartridge according to the present invention is such that the electrophotographic photosensitive member 301, the charging roller 302, the developing apparatus 303, the cleaning apparatus 307, and the like are integrated, and is removably (detachably) mounted onto the main body of the electrophotographic apparatus.

## Example

Hereinafter, the conductive member according to the present invention is described in more detail by way of examples. It should be noted that a method of measuring the electrical resistance of a conductive roller according to each of the examples and comparative examples, and a method of measuring the surface roughness thereof are as described below.

<Method of measuring electrical resistance of conductive roller>

Measured is the resistance of the conductive roller when the roller is energized by being brought into abutment with a columnar metal 32 having the same curvature as that of an electrophotographic photosensitive member with the same stress as that in a use state when the photosensitive member is used in an electrophotographic apparatus as illustrated in FIGS. 6A and 6B. In FIG. 6A, bearings 33a and 33b are fixed to dead weights, and apply, to both ends of the conductive support 1 of a conductive base layer member 40, stresses for pressing the member vertically downward. Placed in the vertically downward direction of the conductive base layer member 40 is the columnar metal 32 parallel to the conductive base layer member 40. Then, the conductive base layer member 40 is pressed against the columnar metal 32 with the bearings 33a and 33b as illustrated in FIG. 6B while the columnar metal 32 is rotated by a driving apparatus (not shown). While the columnar metal 32 is rotated at the same rotational speed as that of the electrophotographic photosensitive drum in its use state to cause the conductive base layer member 40 to rotate in association with the rotation, a DC voltage of -200 V is applied from a power supply 34 and then a current flowing out of the columnar metal 32 is measured with an ammeter A. The electrical resistance of the conductive base layer member 40 is calculated from the applied voltage at this time and the measured current. In this example, the member 40 was brought into abutment with the columnar metal 32 having a diameter of 30 mm by applying a force of 5 N to each of both ends of the conductive support 1, and then the columnar metal 32 was rotated at a circumferential speed of 150 mm/sec.

<Method of measuring surface roughness of conductive roller>

The surface roughness of the conductive base layer is preferably 50 μm or less, particularly preferably 30 μm or less, more preferably 20 μm or less in terms of ten-point average roughness (Rz jis 1994). A surface roughness-measuring apparatus (trade name: SURFCORDER SE3500, manufactured by Kosaka Laboratory Ltd.) was used in the measurement of the surface roughness and a contact needle made of diamond having a tip radius of 2 μm was also used. Measurement conditions were based on JIS B0601:1994, a measuring speed was set to 0.5 mm/sec, a cut-off frequency λc was set to 0.8 mm, a reference length was set to 0.8 mm, and an evaluation length was set to 8.0 mm.

<Synthesis of polymer No. 1>

A polymer No. 1 was synthesized by a living anion polymerization method.

First, a pressure-resistant container having a volume of 10 L was prepared and air in the pressure-resistant container was replaced with dry argon. Next, 8.46 g of a styrene monomer purified with molecular sieves, 1.0 L of cyclohexane as a polymerization solvent purified with molecular sieves, and 0.80 g of a 10-wt% hexane solution of sec-butyllithium as an initiator were added to the container.

Then, under an argon atmosphere, polymerization was performed at a temperature of 50°C for 4 hours. After a lapse of 4 hours, 41.08 g of a butadiene monomer purified with activated alumina and 42.00 g of an isoprene monomer were subsequently added to the container, and then polymerization was performed at a temperature of 50°C for 2 hours. After a lapse of an additional two hours, 8.46 g of a styrene monomer purified with molecular sieves were added to the container, and then polymerization was performed at a temperature of 50°C for 4 hours. After the completion of the reaction, 5.0 L of methanol were added to the reaction solution to reprecipitate the solution with methanol. Thus, 100 g of a terpolymer formed of a styrene block, a block obtained by the random copolymerization of butadiene and isoprene, and a styrene block were obtained.

The terpolymer is represented as "styrene-butadiene/isoprene-styrene" in Table 1-2 below.

The resultant terpolymer had a mass-average molecular weight Mw by gel permeation chromatography (GPC) of $8.0\times10^4$. The terpolymer is defined as the polymer No. 1.

Table 1-2 shows a volume ratio among the styrene block, block obtained by the random copolymerization of butadiene and isoprene, and styrene block of the polymer No. 1. In addition, Table 1-2 also shows a volume ratio between butadiene and isoprene in the block obtained by the random copolymerization of butadiene and isoprene.

<Synthesis of polymers Nos. 2 to 13 and 19>

Polymers Nos. 2 to 13 and a polymer No. 19 were each synthesized in the same manner as in the polymer No. 1 except that the blending quantities of the raw materials and the initiator were changed as shown in Table 1-1. Table 1-2 shows the weight-average molecular weight of each of the resultant polymers, a volume ratio among the respective blocks thereof, and a volume ratio between butadiene and isoprene in the block obtained by the random copolymerization of butadiene and isoprene.

Table 1-1

| Polymer No. | Blending quantity (g) | | | | |
|---|---|---|---|---|---|
| | 10-Wt% solution of initiator | Styrene (first time) | Butadiene | Isoprene | Styrene (second time) |
| 1 | 0.80 | 8.46 | 41.08 | 42.00 | 8.46 |
| 2 | 0.80 | 16.54 | 33.09 | 33.82 | 16.54 |
| 3 | 0.80 | 19.94 | 29.73 | 30.39 | 19.94 |
| 4 | 0.43 | 8.46 | 41.08 | 42.00 | 8.46 |
| 5 | 1.60 | 8.46 | 41.08 | 42.00 | 8.46 |
| 6 | 0.80 | 8.54 | 82.93 | 0.00 | 8.54 |
| 7 | 0.80 | 16.67 | 66.67 | 0.00 | 16.67 |
| 8 | 0.80 | 20.07 | 59.86 | 0.00 | 20.07 |
| 9 | 0.80 | 8.38 | 0.00 | 83.24 | 8.38 |
| 10 | 0.80 | 16.42 | 0.00 | 67.15 | 16.42 |
| 11 | 0.80 | 19.81 | 0.00 | 60.39 | 19.81 |
| 12 | 0.80 | 8.41 | 16.34 | 66.83 | 8.41 |
| 13 | 0.80 | 8.51 | 66.10 | 16.89 | 8.51 |
| 19 | 0.80 | 43.37 | 6.56 | 6.71 | 43.37 |

Table 1-2

| Polymer No. | Composition ratio among respective blocks of copolymer (volume ratio) | Composition ratio of copolymerization block (volume ratio) | Mw |
|---|---|---|---|
| 1 | Styrene-butadiene/isoprene-styrene triblock copolymer=7.5:85:7.5 | Butadiene:isoprene=5:5 | 8.0E+04 |
| 2 | Styrene-butadiene/isoprene-styrene triblock copolymer=15:70:15 | Butadiene:isoprene=5:5 | 8.0E+04 |
| 3 | Styrene-butadiene/isoprene-styrene triblock copolymer=18.25:63.5:18.25 | Butadiene:isoprene=5:5 | 8.0E+04 |
| 4 | Styrene-butadiene/isoprene-styrene triblock copolymer=7.5:85:7.5 | Butadiene:isoprene=5:5 | 1.5E+05 |
| 5 | Styrene-butadiene/isoprene-styrene triblock copolymer=7.5:85:7.5 | Butadiene:isoprene=5:5 | 4.0E+04 |
| 6 | Styrene-butadiene-styrene triblock copolymer=7.5:85:7.5 | - | 8.0E+04 |
| 7 | Styrene-butadiene-styrene triblock copolymer=15:70:15 | - | 8.0E+04 |
| 8 | Styrene-butadiene-styrene triblock copolymer=18.25:63.5:18.25 | - | 8.0E+04 |
| 9 | Styrene-isoprene-styrene triblock copolymer=7.5:85:7.5 | - | 8.0E+04 |
| 10 | Styrene-isoprene-styrene triblock copolymer=15:70:15 | - | 8.0E+04 |

(continued)

| Polymer No. | Composition ratio among respective blocks of copolymer (volume ratio) | Composition ratio of copolymerization block (volume ratio) | Mw |
|---|---|---|---|
| 11 | Styrene-isoprene-styrene triblock copolymer=18.25:63.5:18.25 | - | 8.0E+04 |
| 12 | Styrene-butadiene/isoprene-styrene triblock copolymer=7.5:85:7.5 | Butadiene:isoprene=2:8 | 8.0E+04 |
| 13 | Styrene-butadiene/isoprene-styrene triblock copolymer=7.5:85:7.5 | Butadiene:isoprene=8:2 | 8.0E+04 |
| 19 | Styrene-butadiene/isoprene-styrene triblock copolymer=42.5:15:42.5 | Butadiene:isoprene=5:5 | 8.0E+04 |

<Synthesis of polymer No. 14>

A polymer No. 14 was synthesized by a living radical polymerization method.

First, under a nitrogen atmosphere, 0.28 g of copper(I) bromide, 0.45 g of hexamethyltriethylenetetramine, 0.675 g of dimethyl-2,6-dibromoheptane dioate, and 90.23 g of tert-butyl acrylate (tBA) were mixed in dimethylformamide (DMF). Then, dissolved oxygen was replaced with nitrogen, followed by the performance of a reaction at a temperature of 70°C.

Next, 0.06 g of copper(I) bromide, 0.10 g of hexamethyltriethylenetetramine, and 9.77 g of a methyl methacrylate monomer were mixed in the resultant poly-tBA having bromine at each of both terminals, followed by replacement with nitrogen. After a reaction had been performed at a temperature of 100°C, quenching with liquid nitrogen was performed to stop the reaction. After that, purification by reprecipitation in methanol was performed. Thus, 100 g of a PMMA-b-PtBA-b-PMMA triblock copolymer were obtained.

Next, a deprotection reaction for a tert-butyl group of the PtBA segment was performed by mixing the resultant block copolymer with 400 g of trifluoroacetic acid in chloroform at room temperature, thereby transforming the segment into a carboxylic acid. Thus, a PMMA-b-polyacrylic acid (PAA)-b-PMMA triblock copolymer was obtained. The resultant triblock copolymer had a mass-average molecular weight by GPC of $4.0\times10^4$. The copolymer was defined as the polymer No. 14.

<Synthesis of polymers Nos. 15 to 18 and 20>

Polymers Nos. 15 to 18 and 20 were each synthesized in the same manner as in the polymer No. 14 except that the blending quantities of the raw materials and the initiator were changed as shown in Table 2-1. Table 2-1 shows the weight-average molecular weight Mw of each of the resultant polymers and a volume ratio among the respective blocks thereof.

Table 2-1

| Polymer No. | Blending quantity (g) | | | | | | | Amount of resultant polymer (g) |
|---|---|---|---|---|---|---|---|---|
| | tert-Butyl acrylate | Copper bromide | | Hexamethyltriethylenetetramine | | Dimethyl-2,6-dibromoheptane dioate | Methyl methacrylate | |
| | | First time | Second time | First time | Second time | | | |
| 14 | 90.23 | 0.28 | 0.45 | 0.675 | 9.770 | 0.060 | 0.10 | 60.50 |
| 15 | 79.17 | 0.28 | 0.45 | 0.675 | 20.830 | 0.060 | 0.10 | 65.34 |
| 16 | 73.92 | 0.28 | 0.45 | 0.675 | 26.080 | 0.060 | 0.10 | 67.64 |
| 17 | 90.23 | 0.14 | 0.23 | 0.337 | 9.770 | 0.030 | 0.05 | 60.50 |
| 18 | 90.23 | 0.56 | 0.90 | 1.350 | 9.770 | 0.120 | 0.20 | 60.50 |
| 20 | 36.51 | 0.28 | 0.45 | 0.675 | 63.490 | 0.060 | 0.10 | 84.02 |

Table 2-2

| Polymer No. | Polymer | |
|---|---|---|
| | Composition (volume ratio) | Molecular weight Mw |
| 14 | Methyl methacrylate-acrylic acid-methyl methacrylate triblock copolymer=7.5:85:7.5 | 4.0E+04 |
| 15 | Methyl methacrylate-acrylic acid-methyl methacrylate triblock copolymer=15:70:15 | 4.0E+04 |
| 16 | Methyl methacrylate-acrylic acid-methyl methacrylate triblock copolymer=18.25:63.5:18.25 | 4.0E+04 |
| 17 | Methyl methacrylate-acrylic acid-methyl methacrylate triblock copolymer=7.5:85:7.5 | 8.0E+04 |
| 18 | Methyl methacrylate-acrylic acid-methyl methacrylate triblock copolymer=7.5:85:7.5 | 2.0E+04 |
| 20 | Methyl methacrylate-acrylic acid-methyl methacrylate triblock copolymer=42.5:15:42.5 | 4.0E+04 |

(Example 1)

100 Grams of the polymer No. 1 were dissolved in 4.0 L of dichloromethane and then the temperature of the solution was maintained at 40°C in an argon atmosphere. 27.52 Grams of concentrated sulfuric acid were dropped to the dichloromethane solution. After the completion of the dropping, the temperature of the resultant liquid was increased to 80°C and then the liquid was subjected to a reaction by being stirred for 72 hours while the liquid temperature was maintained at 80°C. Next, 1.0 L of methanol was dropped into the reaction solution to stop the reaction. The resultant reaction product was washed by repeating each of dissolution in toluene and reprecipitation with methanol three times. After that, the reaction product was dried in the air at a temperature of 80°C for 24 hours. Next, the dried reaction product was dissolved in 1.0 L of toluene, and then the solution was subjected to dry distillation at a temperature of 120°C while being stirred in a nitrogen atmosphere. During the dry distillation, 500 g of p-toluenesulfonylhydrazine were added to the solution to perform a reaction for 4 hours. Thus, a double bond derived from diene was hydrogenated.

The resultant hydrogenated product was dissolved in toluene and reprecipitated with methanol. The foregoing operation was repeated five times to wash the hydrogenated product. After that, the washed product was dried in the air at 80°C for 24 hours. Thus, a thermoplastic elastomer No. 1 according to Example 1 was obtained.

The sulfonation ratio of the thermoplastic elastomer No. 1 was measured by proton NMR. As a result, it was found that 20 mol% of a sulfonic group was introduced to a double bond of a diene block.

In addition, an ultrathin section of the thermoplastic elastomer No. 1 was cut out with a cryosectioning apparatus (trade name: Cryoultramicrotome, manufactured by Leica Microsystems) and then subjected to steam staining with ruthenium tetroxide. The ultrathin section was observed with a transmission electron microscope (TEM). As a result, it was confirmed that a polystyrene block component formed a spherical microphase-separated structure.

Next, the thermoplastic elastomer No. 1 was set in a transfer die in which a tubular die having a maximum inner diameter of 8.6 mm and a crown of 150 μm with a cored bar (diameter: 6 mm, length: 252 mm, made of SUM22, electroless nickel plating: 6 μm) set in its central portion had been set. Then, the elastomer was molded with a pressing machine having a temperature of 240°C and then cooled to room temperature with a cold press. After that, the resultant roller was taken out of the transfer die. Thus, a conductive roller No. 1 having a crown shape with a diameter at an end portion of 8.40 mm and a diameter at the central portion of 8.55 mm was obtained.

<Evaluations of conductive roller>

<<Evaluation (1)>>

The conductive roller No. 1 was left to stand in the N/N environment for 24 hours. After that, its microhardness was measured with a microrubber hardness meter (trade name: MD-1 capa Type A, manufactured by KOBUNSHI KEIKI CO., LTD.).

<<Evaluation (2)>>

The surface roughness (Rzjis) of the conductive roller No. 1 was measured by the method described in the foregoing.

<<Evaluation (3)>>

The electrical resistance value of the conductive roller No. 1 was calculated by the method described in the foregoing.

<<Evaluation (4)>>

An electrophotographic laser printer capable of outputting a recording medium at a speed of 160 mm/sec and having an image resolution of 1,200 dpi was prepared as an electrophotographic laser printer. The electrophotographic laser printer can convey A4-sized paper in its longitudinal direction. In addition, its electrophotographic photosensitive member is an electrophotographic photosensitive drum according to a reversal development mode obtained by forming an organic photosensitive layer having a thickness of 16 μm on an aluminum cylinder. It should be noted that the outermost layer of the electrophotographic photosensitive drum is formed of a charge-transporting layer using a modified polyallylate resin as a binder resin.

In addition, the toner of the printer is a polymerized toner having a glass transition temperature of 63°C and a mass-average particle diameter of 6.5 μm obtained by: polymerizing a random copolymer of styrene and butyl acrylate containing a wax as a main agent, a charge control agent, a dye, and the like; further polymerizing a polyester thin layer on its surface; and externally adding silica fine particles and the like. The conductive roller No. 1 was mounted as a charging roller on the electrophotographic laser printer. Then, the electrophotographic laser printer was placed in the N/N environment for 24 hours. After that, image output was performed in the N/N environment. A primary charging voltage of -1,150 V was applied to the charging roller. Image patterns to be output were five kinds, i.e., (pattern 1) to (pattern 5) shown in Table 3 below.

Table 3

| Pattern No. | Kind of image |
|---|---|
| 1 | An intermediate image exactly intermediate in charged potential between a blank black image and a blank white image obtained by reducing the quantity of laser light to 35% as compared with that in the case where the blank black image is output. |
| 2 | Such a pattern that dash-dotted lines extending in the rotational circumferential direction of the photosensitive member and each having a width of 1 dot are drawn at an interval of 1 dot in the rotational axis direction of the photosensitive member so that dots and intervals may be arranged in a staggered fashion in the circumferential directions of adjacent dash-dotted lines as illustrated in FIG. 7A. |
| 3 | Such an image pattern that straight lines extending in the rotational axis direction of the photosensitive member and each having a width of 1 dot are drawn at an interval of 2 dots as illustrated in FIG. 7B. |
| 4 | Such an image pattern that straight lines extending in the rotational axis direction of the photosensitive member and each having a width of 2 dots are drawn at an interval of 3 dots as illustrated in FIG. 7C. |
| 5 | A blank white image |

The resultant image patterns were visually observed and evaluated for the presence or absence of unevenness resulting from the charging roller on the basis of criteria shown in Table 4 below.

Table 4

| Rank | Evaluation criterion |
|---|---|
| A | No unevenness is observed in each of all image patterns. |
| B | Unevenness is observed in an image of the pattern 1. No unevenness is observed in an image of any other pattern. |
| C | Unevenness is observed in each of images of the pattern 1 and the pattern 2. No unevenness is observed in an image of any other pattern. |
| D | Unevenness is observed in each of images of the pattern 1, the pattern 2, and the pattern 3. No unevenness is observed in an image of any other pattern. |
| E | Unevenness is observed in an image of any pattern except the pattern 5. |

(continued)

| Rank | Evaluation criterion |
|---|---|
| F | Unevenness is observed in each of all image patterns. |

<<Evaluation (5)>>

Next, such an electrophotographic image that horizontal lines each having a width of 2 dots were repeatedly drawn at an interval of 150 dots was output on 15,000 sheets with the electrophotographic laser printer under the N/N environment. The formation of the electrophotographic images was performed according to an intermittent mode. After the output of the 15,000 electrophotographic images, images of the five patterns shown in Table 3 were output under the N/N environment again. Then, those images were visually observed and evaluated by the criteria shown in Table 4.

It should be noted that the term "intermittent mode" as used in this evaluation means that an operation in which the printer is stopped after the output of only one electrophotographic image from a state where the printer is stopped is repeated. That is, in the intermittent mode, the electrophotographic photosensitive member repeats the operations of an idle rotation, the output of an electrophotographic image, an idle rotation, and a stop. Therefore, the operation of outputting one electrophotographic image and the operation of stopping the electrophotographic photosensitive member are alternately repeated 15,000 times each.

<<Evaluation (6)>>

After the output of the images of the five patterns, the charging roller as an object to be evaluated was taken out and then its surface was washed by being sprayed with high-pressure ion-exchanged water with a high-pressure water washing machine. Next, high-pressure dry air was blown on the surface to remove the water. The charging roller after the washing was left to stand in the N/N environment for 24 hours and then its electrical resistance was calculated by the same method as that in Evaluation (1). In addition, a variation ratio (%) with respect to the electrical resistance value (initial value) determined in Evaluation (3) was determined from the following equation.

Variation ratio of electrical resistance value={(value in Evaluation (6)−value in Evaluation (3))/value in Evaluation (3)}×100

(Example 2) to (Example 17)

Thermoplastic elastomers Nos. 2 to 17 were each synthesized in the same manner as in Example 1 except that in Example 1, the polymer No. 1 was changed to a polymer with a polymer number shown in Table 5-1 and the blending quantity of concentrated sulfuric acid was changed to an amount shown in Table 5-1. The introduction ratio of a sulfonic group with respect to a double bond of a diene block was determined for each of the resultant thermoplastic elastomers Nos. 2 to 17 in the same manner as in Example 1 by employing proton NMR.

In addition, the states of the microphase-separated structures of the thermoplastic elastomers Nos. 2 to 17 were observed in the same manner as in Example 1. Table 5-2 shows the composition of each of the thermoplastic elastomers Nos. 1 to 17 each serving as the A-B-A type copolymer of the present invention, the kind of microphase-separated structure constituted of the polystyrene block of each elastomer, and the introduction ratio of a sulfonic group with respect to a double bond of the diene block of each elastomer.

Further, conductive rollers Nos. 2 to 17 were produced in the same manner as in Example 1 by using the thermoplastic elastomers Nos. 2 to 17 and then subjected to Evaluations (1) to (6). Table 5-3 shows the results.

(Example 18)

A sulfonic group was introduced to the polymer No. 1 in the same manner as in Example 1 except that the blending quantity of concentrated sulfuric acid in Example 1 was changed to 27.52 g. Next, 1.0 L of methanol was dropped into the reaction solution to stop the reaction. The resultant reaction product was washed by repeating each of dissolution in toluene and reprecipitation with methanol three times. After the washing, the reaction product was dried in the air at 80°C for 24 hours. Next, the dried reaction product was dissolved in 1 L of toluene and then 200 g of glacial acetic acid were gradually dropped to the solution while the solution was stirred in a nitrogen atmosphere. After the

completion of the dropping, the temperature of the resultant solution was increased and then the solution was stirred for 72 hours while its temperature was maintained at 80°C. The resultant reaction product was washed by repeating each of dissolution in toluene and reprecipitation with methanol five times. After the washing, the washed product was dried in the air at 80°C for 24 hours. Thus, a thermoplastic elastomer No. 18 was obtained. The introduction ratio of a carboxyl group with respect to a double bond of a diene block was determined for the thermoplastic elastomer No. 18 in the same manner as in Example 1 by employing proton NMR.

In addition, the state of the microphase-separated structure of the thermoplastic elastomer No. 18 was observed in the same manner as in Example 1. Table 5-2 shows the composition of the thermoplastic elastomer No. 18 serving as the A-B-A type copolymer of the present invention, the kind of microphase-separated structure constituted of the polystyrene block of the elastomer, and the introduction ratio of a carboxyl group with respect to a double bond of the diene block of the elastomer.

Further, a conductive roller No. 18 was produced in the same manner as in Example 1 by using the thermoplastic elastomer No. 18 and then subjected to Evaluations (1) to (4). Table 5-3 shows the results.

(Example 19) and (Example 20)

Thermoplastic elastomers of Examples 19 and 20 were each obtained in the same manner as in Example 18 except that in Example 18, the polymer No. 1 was changed to a polymer with a polymer number shown in Table 5-1 and the blending quantity of concentrated sulfuric acid was changed to an amount shown in Table 5-1, and in the same manner as in Example 18 except that the compositions of the thermoplastic elastomers Nos. 19 and 20 were changed as described below. The introduction ratio of a carboxyl group with respect to a double bond of a diene block was determined for each of the resultant thermoplastic elastomers Nos. 19 and 20 in the same manner as in Example 18 by employing proton NMR.

In addition, the states of the microphase-separated structures of the thermoplastic elastomers Nos. 19 and 20 were observed in the same manner as in Example 18. Table 5-2 shows the composition of each of the thermoplastic elastomers Nos. 19 and 20 each serving as the A-B-A type copolymer of the present invention, the kind of microphase-separated structure constituted of the polystyrene block of each elastomer, and the introduction ratio of a carboxyl group with respect to a double bond of the diene block of each elastomer.

Further, conductive rollers Nos. 19 and 20 were produced in the same manner as in Example 1 by using the thermoplastic elastomers Nos. 19 and 20 and then subjected to Evaluations (1) to (6). Table 5-3 shows the results.

Table 5-1

| Example No. | Number of polymer used in synthesis | Blending quantity of concentrated sulfuric acid (g) |
|---|---|---|
| 2 | 2 | 22.17 |
| 3 | 3 | 19.92 |
| 4 | 4 | 27.52 |
| 5 | 5 | 27.52 |
| 6 | 6 | 30.66 |
| 7 | 7 | 24.65 |
| 8 | 8 | 22.13 |
| 9 | 9 | 24.44 |
| 10 | 10 | 19.72 |
| 11 | 11 | 17.73 |
| 12 | 12 | 25.66 |
| 13 | 13 | 29.4 |
| 14 | 1 | 13.76 |
| 15 | 1 | 20.64 |
| 16 | 1 | 34.4 |
| 17 | 1 | 41.28 |
| 18 | 1 | 27.52 |

(continued)

| Example No. | Number of polymer used in synthesis | Blending quantity of concentrated sulfuric acid (g) |
|---|---|---|
| 19 | 6 | 22.13 |
| 20 | 9 | 24.44 |

Table 5-2

| Example | Thermoplastic elastomer No. | Type of structure of A block in microphase-separated structure | Composition of A-B-A type block copolymer | | | | |
|---|---|---|---|---|---|---|---|
| | | | A block | | B block | | Introduction ratio of ion exchange group |
| | | | Constitutional unit | Volume fraction (%) | Constitutional unit | Volume fraction (%) | (Mol%) |
| 1 | 1 | Spherical | Styrene | 15 | Butadiene/isoprene | 85 | 20 |
| 2 | 2 | Cylindrical | Styrene | 30 | Butadiene/isoprene | 70 | 20 |
| 3 | 3 | Bicontinuous | Styrene | 36.5 | Butadiene/isoprene | 63.5 | 20 |
| 4 | 4 | Spherical | Styrene | 15 | Butadiene/isoprene | 85 | 20 |
| 5 | 5 | Spherical | Styrene | 15 | Butadiene/isoprene | 85 | 20 |
| 6 | 6 | Spherical | Styrene | 15 | Butadiene | 85 | 20 |
| 7 | 7 | Cylindrical | Styrene | 30 | Butadiene | 70 | 20 |
| 8 | 8 | Bicontinuous | Styrene | 36.5 | Butadiene | 63.5 | 20 |
| 9 | 9 | Spherical | Styrene | 15 | Isoprene | 85 | 20 |
| 10 | 10 | Cylindrical | Styrene | 30 | Isoprene | 70 | 20 |
| 11 | 11 | Bicontinuous | Styrene | 36.5 | Isoprene | 63.5 | 20 |
| 12 | 12 | Spherical | Styrene | 15 | Butadiene/isoprene | 85 | 20 |
| 13 | 13 | Spherical | Styrene | 15 | Butadiene/isoprene | 85 | 20 |
| 14 | 14 | Spherical | Styrene | 15 | Butadiene/isoprene | 85 | 10 |
| 15 | 15 | Spherical | Styrene | 15 | Butadiene/isoprene | 85 | 15 |
| 16 | 16 | Spherical | Styrene | 15 | Butadiene/isoprene | 85 | 25 |
| 17 | 17 | Spherical | Styrene | 15 | Butadiene/isoprene | 85 | 30 |
| 18 | 18 | Spherical | Styrene | 15 | Butadiene/isoprene | 85 | 20 |
| 19 | 19 | Spherical | Styrene | 15 | Butadiene | 85 | 20 |
| 20 | 20 | Spherical | Styrene | 15 | Isoprene | 85 | 20 |

Table 5-3

| Example | Conductive roller No. | Evaluation (1) | Evaluation (2) | Evaluation for electrical resistance value | | | Image evaluation | |
|---|---|---|---|---|---|---|---|---|
| | | | | Evaluation (3) | Evaluation (6) | Variation ratio of electrical resistance value | Evaluation (4) | Evaluation (5) |
| | | (°) | (μm) | (Ω) | (Ω) | | | |
| 1 | 1 | 60 | 2.4 | 750,000 | 754,500 | 1% | A | A |
| 2 | 2 | 66 | 2.2 | 1,056,338 | 1,059,507 | 0% | A | A |
| 3 | 3 | 68 | 2.3 | 1,442,307 | 1,443,750 | 0% | A | A |
| 4 | 4 | 61 | 2.5 | 824,175 | 830,769 | 1% | A | A |
| 5 | 5 | 59 | 2.1 | 681,818 | 685,909 | 1% | A | A |
| 6 | 6 | 60 | 2.2 | 742,574 | 747,772 | 1% | A | A |
| 7 | 7 | 66 | 2.4 | 1,041,666 | 1,044,791 | 0% | A | A |
| 8 | 8 | 68 | 2.6 | 1,442,307 | 1,443,750 | 0% | A | A |
| 9 | 9 | 60 | 2.5 | 757,575 | 762,878 | 1% | A | A |
| 10 | 10 | 66 | 2.2 | 1,086,956 | 1,090,217 | 0% | A | A |
| 11 | 11 | 68 | 2.6 | 1,530,612 | 1,532,142 | 0% | A | A |
| 12 | 12 | 60 | 2.7 | 750,000 | 755,250 | 1% | A | A |
| 13 | 13 | 60 | 2.2 | 742,574 | 747,772 | 1% | A | A |
| 14 | 14 | 62 | 2.3 | 4,166,666 | 4,687,500 | 13% | B (Horizontal streak) | B (Horizontal streak) |
| 15 | 15 | 61 | 2.5 | 1,630,434 | 1,764,130 | 8% | A | B (Horizontal streak) |
| 16 | 16 | 59 | 2.1 | 441,176 | 442,941 | 0% | A | A |
| 17 | 17 | 58 | 2.6 | 300,000 | 300,900 | 0% | B (White dot) | B (White dot) |
| 18 | 18 | 59 | 2.4 | 925,925 | 948,148 | 2% | A | A |
| 19 | 19 | 59 | 2.2 | 914,634 | 934,756 | 2% | A | A |
| 20 | 20 | 59 | 2.3 | 949,367 | 969,303 | 2% | A | A |

(Example 21)

60.5 Grams of the polymer No. 14 were dissolved in DMF, and then 90 g of sodium hydride and 17.93 g of a sultone represented by the following formula (12) were added to the solution, followed by the performance of reflux by heating to sulfonate a polyacrylic acid segment. Thus, a thermoplastic elastomer No. 21 formed of a triblock copolymer having a PMMA at each of both terminals of the sulfonic group-containing segment was obtained.

[Chem. 5]

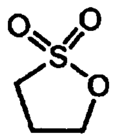

(12)

The introduction ratio of a sulfonic group with respect to the carboxyl group of the acrylic acid block was determined for the thermoplastic elastomer No. 21 in the same manner as in Example 1 by employing proton NMR.

In addition, the state of the microphase-separated structure of the thermoplastic elastomer No. 21 was observed in the same manner as in Example 1. Table 6-2 shows the composition of the thermoplastic elastomer No. 21 serving as the A-B-A type copolymer of the present invention, the kind of microphase-separated structure constituted of the methyl methacrylate block of the elastomer, and the introduction ratio of a sulfonic group with respect to the carboxyl group of the acrylic acid block of the elastomer.

Further, a conductive roller No. 21 was produced in the same manner as in Example 1 by using the thermoplastic elastomer No. 21 and then subjected to Evaluations (1) to (6). Table 6-3 shows the results.

(Example 22) to (Example 33)

Thermoplastic elastomers Nos. 22 to 33 were each synthesized in the same manner as in Example 21 except that in Example 21, the polymer used in the synthesis and its blending quantity, and the blending quantity of the sultone represented by the formula (12) were changed as shown in Table 6-1. The introduction ratio of a sulfonic group with respect to the carboxyl group of the acrylic acid block was determined for the thermoplastic elastomer Nos. 22 to 33 in the same manner as in Example 1 by employing proton NMR.

In addition, the state of the microphase-separated structure of the thermoplastic elastomer Nos. 22 to **33** observed in the same manner as in Example 1. Table 6-2 shows the composition of the thermoplastic elastomer Nos. 22 to **33** serving as the A-B-A type copolymer of the present invention, the kind of microphase-separated structure constituted of the methyl methacrylate block of the elastomer, and the introduction ratio of a sulfonic group with respect to the carboxyl group of the acrylic acid block of the elastomer.

Further, a conductive **roller Nos. 22 to 33 was produced in the** same manner as in Example 1 by using the thermoplastic elastomer Nos. 22 to 33 and then subjected to Evaluations (1) to (6). Table 6-3 shows the results.

Table 6-1

| Example No. | Polymer used in synthesis | | Sultone | |
|---|---|---|---|---|
| | No. | Blending quantity (g) | Kind | Blending quantity (g) |
| 22 | 15 | 65.34 | Formula (12) | 15.09 |
| 23 | 16 | 67.64 | Formula (12) | 14.09 |
| 24 | 17 | 60.60 | Formula (12) | 17.93 |
| 25 | 18 | 60.50 | Formula (13) | 17.93 |
| 26 | 14 | 60.50 | Formula (13) | 15.22 |
| 27 | 14 | 60.50 | Formula (14) | 16.91 |
| 28 | 14 | 60.50 | Formula (15) | 19.17 |
| 29 | 14 | 60.50 | Formula (16) | 19.17 |
| 30 | 14 | 60.50 | Formula (12) | 8.60 |

(continued)

| Example No. | Polymer used in synthesis | | Sultone | |
|---|---|---|---|---|
| | No. | Blending quantity (g) | Kind | Blending quantity (g) |
| 31 | 14 | 60.50 | Formula I (12) | 12.90 |
| 32 | 14 | 60.50 | Formula (12) | 21.50 |
| 33 | 14 | 60.50 | Formula (12) | 25.79 |

It should be noted that the sultones represented by the formulae (13) to (15) in Table 6-1 have the following respective structures.

[Chem. 6]

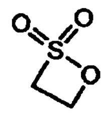

(13)

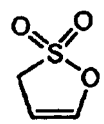

(14)

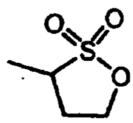

(15)

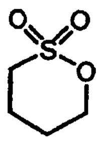

(16)

Table 6-2

| Example | Thermoplastic elastomer No. | Type of structure of A block in microphase-separated structure | Composition of A-B-A type block copolymer | | | | |
|---|---|---|---|---|---|---|---|
| | | | A block | | B block | | Introduction ratio of ion exchange group |
| | | | Material | Volume fraction (%) | Material | Volume fraction (%) | (Mol%) |
| 21 | 21 | Spherical | Methyl methacrylate | 15 | Acrylic acid | 85 | 20 |
| 22 | 22 | Cylindrical | Methyl methacrylate | 30 | Acrylic acid | 70 | 20 |

(continued)

| Example | Thermoplastic elastomer No. | Type of structure of A block in microphase-separated structure | Composition of A-B-A type block copolymer | | | | |
|---|---|---|---|---|---|---|---|
| | | | A block | | B block | | Introduction ratio of ion exchange group |
| | | | Material | Volume fraction (%) | Material | Volume fraction (%) | (Mol%) |
| 23 | 23 | Bicontinuous | Methyl methacrylate | 36.5 | Acrylic acid | 63.5 | 20 |
| 24 | 24 | Spherical | Methyl methacrylate | 15 | Acrylic acid | 85 | 20 |
| 25 | 25 | Spherical | Methyl methacrylate | 15 | Acrylic acid | 85 | 20 |
| 26 | 26 | Spherical | Methyl methacrylate | 15 | Acrylic acid | 85 | 20 |
| 27 | 27 | Spherical | Methyl methacrylate | 15 | Acrylic acid | 85 | 20 |
| 28 | 28 | Spherical | Methyl methacrylate | 15 | Acrylic acid | 85 | 20 |
| 29 | 29 | Spherical | Methyl methacrylate | 15 | Acrylic acid | 85 | 20 |
| 30 | 30 | Spherical | Methyl methacrylate | 15 | Acrylic acid | 85 | 10 |
| 31 | 31 | Spherical | Methyl methacrylate | 15 | Acrylic acid | 85 | 15 |
| 32 | 32 | Spherical | Methyl methacrylate | 15 | Acrylic acid | 85 | 25 |
| 33 | 33 | Spherical | Methyl methacrylate | 15 | Acrylic acid | 85 | 30 |

(Example 34)

A conductive tube having an outer diameter of 8.5 mm and a wall thickness of 0.40 mm was produced with the thermoplastic elastomer No. 17. The conductive member of Example 14 was covered with the resultant conductive tube while the tube was inflated with an air pressure. Thus, a conductive elastic body surface layer was produced. A conductive roller No. 34 was produced by cutting and evening the end portions of the tube, and was then subjected to Evaluations (1) to (6).

(Example 35)

A conductive roller No. 35 was produced in the same manner as in Example 34 except that the thermoplastic elastomer No. 14 was used, and was then subjected to Evaluations (1) to (6).

(Example 36) and (Example 37)

A conductive roller No. 36 and a conductive roller No. 37 were produced in the same manner as in the conductive roller No. 1 and the conductive roller No. 35, respectively, and were then subjected to Evaluation (7) below.

<<Evaluation (7)>>

The conductive roller No. 36 and the conductive roller No. 37 were each mounted as a developing roller for the electrophotographic laser printer used in Evaluation (4). After the electrophotographic laser printer had been placed in the N/N environment for 24 hours, image output was performed in the N/N environment. Image patterns to be output were the five kinds, i.e., (pattern 1) to (pattern 5) shown in Table 3. The resultant images were evaluated for the presence or absence of unevenness resulting from the developing roller on the basis of the criteria shown in Table 4.

<<Evaluation (8)>>

15,000 Electrophotographic images were output in the same manner as in Evaluation (5) with the electrophotographic laser printer used in Evaluation (7). Subsequently, the five kinds of image patterns shown in Table 3 were output and then the respective images were evaluated on the basis of the criteria shown in Table 4.

<<Evaluation (9)>>

After the output of the images used in Evaluation (8), each conductive roller was taken out of the laser printer, its electrical resistance value was calculated, and a variation ratio with respect to its initial electrical resistance value was calculated.

Table 6-3 shows the results of the evaluations of the conductive rollers Nos. 21 to 37.

Table 6-3

| Example | Conductive roller No. | Evaluation (1) | Evaluation (2) | Evaluation for electrical resistance value | | | | Image evaluation | | | |
|---|---|---|---|---|---|---|---|---|---|---|---|
| | | | | Evaluation (3) | Evaluation (6) | Evaluation (9) | Variation ratio of electrical resistance value | Evaluation (4) | Evaluation (5) | Evaluation (7) | Evaluation (8) |
| | | (°) | (μm) | (Ω) | (Ω) | (Ω) | | | | | |
| 21 | 21 | 62 | 2.4 | 483,870 | 488,225 | - | 1% | A | A | - | - |
| 22 | 22 | 68 | 2.5 | 707,547 | 711,792 | - | 1% | A | A | - | - |
| 23 | 23 | 70 | 2.3 | 986,842 | 990,789 | - | 0% | A | A | - | - |
| 24 | 24 | 63 | 2.6 | 555,555 | 561,666 | - | 1% | A | A | - | - |
| 25 | 25 | 61 | 2.7 | 454,545 | 458,181 | - | 1% | A | A | - | - |
| 26 | 26 | 61 | 2.6 | 471,698 | 475,943 | - | 1% | A | A | - | - |
| 27 | 27 | 62 | 2.3 | 496,688 | 501,158 | - | 1% | A | A | - | - |
| 28 | 28 | 62 | 2.4 | 487,012 | 491,396 | - | 1% | A | A | - | - |
| 29 | 29 | 62 | 2.5 | 490,196 | 494,607 | - | 1% | A | A | - | - |
| 30 | 30 | 64 | 2.5 | 3,000,0 00 | 3,603,0 00 | - | 20% | B (Horizo ntal streak) | C (Horizo ntal streak) | - | - |
| 31 | 31 | 63 | 2.4 | 1,229,5 08 | 1,407,7 86 | - | 14% | A | B (Horizo ntal streak) | - | - |
| 32 | 32 | 61 | 2.5 | 333,333 | 335,666 | - | 1% | A | A | - | - |
| 33 | 33 | 60 | 2.6 | 241,157 | 242,122 | - | 0% | B (White dot) | B (White dot) | - | - |
| 34 | 34 | 61 | 2.4 | 212,464 | 212,677 | - | 0% | A | A | - | - |
| 35 | 35 | 59 | 2.5 | 961,538 | 962,500 | - | 0% | A | A | - | - |
| 36 | 36 | - | - | 750,000 | - | 750,750 | 0% | - | - | A | A |
| 37 | 37 | - | - | 961,538 | - | 962,500 | 0% | - | - | A | A |

(Example 38) to (Example 40)

Thermoplastic elastomers Nos. 38 to 40 were each synthesized in the same manner as in the thermoplastic elastomer No. 1 except that in the synthesis of the thermoplastic elastomer No. 1 in Example 1, concentrated sulfuric acid was changed to a compound shown in Table 7-1 and its blending quantity was set to an amount shown in Table 7-1. The introduction ratio of a phosphonic acid group with respect to a double bond of a diene block (Examples 38 and 39) and the introduction ratio of a carboxyl group with respect to a double bond of a diene block (Example 40) were determined for the resultant thermoplastic elastomers Nos. 38 to 40, respectively in the same manner as in Example 1 by employing proton NMR. In addition, the state of the microphase-separated structure of the thermoplastic elastomer Nos. 38 to 40 was observed in the same manner as in Example 1. Table 7-2 shows the composition of the thermoplastic elastomer Nos. 38 to 40 serving as the A-B-A type copolymer of the present invention, the kind of microphase-separated structure constituted of the polystyrene block of the elastomer, and the introduction ratio of a phosphonic acid group with respect to a double bond of a diene block or the introduction ratio of a carboxyl group with respect to a double bond of a diene block of the elastomer.

Further, a conductive roller Nos. 38 to 40 was produced in the same manner as in Example 1 by using the thermoplastic elastomer Nos. 38 to 40 and then subjected to Evaluations (1) to (6). Table 7-3 shows the results.

Table 7-1

| Example No. | Compound | Blending quantity (g) |
|---|---|---|
| 38 | Phosphoric acid | 53.94 |
| 39 | Phosphoric acid | 94.40 |
| 40 | Glacial acetic acid | 200.00 |

(Example 41)

60.5 Grams of the polymer No. 14 and 24.38 g of 2-aminobenzenesulfonic acid were weighed. 366 Grams of pyridine were added to the compounds and then the mixture was heated to 60°C. Next, 87.37 g of triphenyl phosphite were added to the mixture. Under a nitrogen atmosphere, the temperature of the resultant mixture was increased to 115°C and then the mixture was stirred for 6.5 hours without being treated. After the temperature of the resultant yellow solution had been returned to room temperature, pyridine was removed by evaporation and then a solution of the residue in ethyl acetate was washed with a 2N aqueous solution of hydrochloric acid. The organic layer and the precipitate were dispersed in tetrahydrofuran, and then an ion exchange resin was added to the resultant, followed by stirring. As a result, a transparent, uniform solution was obtained. The solution was reprecipitated with isopropyl alcohol, filtered, and subjected to vacuum drying. Thus, a pale brown, phosphonated thermoplastic elastomer No. 41 was obtained.

The introduction ratio of a phosphonic acid group with respect to the carboxyl group of the acrylic acid block was determined for the thermoplastic elastomer No. 41 in the same manner as in Example 1 by employing proton NMR.

In addition, the state of the microphase-separated structure of the thermoplastic elastomer No. 41 was observed in the same manner as in Example 1. Table 7-2 shows the composition of the thermoplastic elastomer No. 41 serving as the A-B-A type copolymer of the present invention, the kind of microphase-separated structure constituted of the methyl methacrylate block of the elastomer, and the introduction ratio of a phosphonic acid group with respect to the carboxyl group of the acrylic acid block of the elastomer.

Further, a conductive roller No. 41 was produced in the same manner as in Example 1 by using the thermoplastic elastomer No. 41 and then subjected to Evaluations (1) to (6). Table 7-3 shows the results.

(Example 42)

A thermoplastic elastomer No. 42 was obtained in the same manner as in Example 41 except that in Example 41, the blending quantity of 2-aminobenzenesulfonic acid was changed to 85.34 g and the blending quantity of triphenyl phosphite was changed to 305.80 g.

The introduction ratio of a phosphonic acid group with respect to the carboxyl group of the acrylic acid block was determined for the thermoplastic elastomer No. 42 in the same manner as in Example 1 by employing proton NMR.

In addition, the state of the microphase-separated structure of the thermoplastic elastomer No. 42 was observed in the same manner as in Example 1. Table 7-2 shows the composition of the thermoplastic elastomer No. 42 serving as the A-B-A type copolymer of the present invention, the kind of microphase-separated structure constituted of the methyl methacrylate block of the elastomer, and the introduction ratio of a phosphonic acid group with respect to the

carboxyl group of the acrylic acid block of the elastomer.

Further, a conductive roller No. **42** was produced in the same manner as in Example 1 by using the thermoplastic elastomer No. 42 and then subjected to Evaluations (1) to (6). Table 7-3 shows the results.

(Example 43)

The polymer No. 14 was prepared as a thermoplastic elastomer No. 43. The state of the microphase-separated structure of the thermoplastic elastomer No. 43 was observed in the same manner as in Example 1. Table 7-2 shows the composition of the thermoplastic elastomer No. 43 serving as the A-B-A type copolymer of the present invention and the kind of microphase-separated structure constituted of the methyl methacrylate block of the elastomer. It should be noted that in this example, the introduction ratio of an ion exchange group in Table 7-2 was set to 0% because the carboxyl group which the acrylic acid block constituting the B block of the polymer No. 14 had was not substituted with any other ion exchange group. Further, a conductive roller No. **43** was produced in the same manner as in Example 1 by using the thermoplastic elastomer No. 43 and then subjected to Evaluations (1) to (6). Table 7-3 shows the results.

Table 7-2

| Example | Thermoplastic elastomer No. | Type of structure of A block in microphase-separated structure | Composition of A-B-A type block copolymer | | | | |
|---|---|---|---|---|---|---|---|
| | | | A block | | B block | | Introduction ratio of ion exchange group |
| | | | Material | Volume fraction (%) | Material | Volume fraction (%) | (Mol%) |
| 38 | 38 | Spherical | Styrene | 15 | Butadiene/isoprene | 85 | 40 |
| 39 | 39 | Spherical | Styrene | 15 | Butadiene/isoprene | 85 | 70 |
| 40 | 40 | Spherical | Styrene | 15 | Butadiene/isoprene | 85 | 100 |
| 41 | 41 | Spherical | Methyl methacrylate | 15 | Acrylic acid | 85 | 40 |
| 42 | 42 | Spherical | Methyl methacrylate | 15 | Acrylic acid | 85 | 70 |
| 43 | 43 | Spherical | Methyl methacrylate | 15 | Acrylic acid | 85 | 100 |

Table 7-3

| Example | Evaluation (1) | Evaluation (2) | Evaluation for electrical resistance value | | | Image evaluation | |
|---|---|---|---|---|---|---|---|
| | | | Evaluation (3) | Evaluation (6) | Variation ratio of electrical resistance value | Evaluation (4) | Evaluation (5) |
| | (°) | (μm) | (Ω) | (Ω) | | | |
| 38 | 62 | 2.5 | 428,571 | 443,142 | 3% | B (Horizontal streak) | C (Horizontal streak) |
| 39 | 63 | 2.6 | 337,837 | 345,945 | 2% | A | B (Horizontal streak) |
| 40 | 64 | 2.4 | 213,068 | 259,517 | 22% | C (Horizontal streak) | D (Horizontal streak) |
| 41 | 64 | 2.3 | 365,853 | 381,585 | 4% | A | B (Horizontal streak) |
| 42 | 65 | 2.5 | 274,725 | 284,615 | 4% | B (Horizontal streak) | C (Horizontal streak) |
| 43 | 66 | 2.4 | 163,043 | 213,260 | 31% | C (Horizontal streak) | D (Horizontal streak) |

(Comparative Example 1)

A hydrin rubber containing 1 part of trimethyl octyl ammonium perchlorate was subjected to vulcanization molding in a die. Thus, a conductive roller No. C-1 having the same shape as that of Example 1 was obtained. The roller was subjected to Evaluations (1) to (6). Table 8-2 shows the results.

(Comparative Example 2)

An acrylonitrile-butadiene rubber compounded with 70 parts of carbon black was subjected to vulcanization molding in a die. Thus, a conductive roller No. C-2 having the same shape as that of Example 1 was obtained. The roller was subjected to Evaluations (1) to (6). Table 8-2 shows the results.

(Comparative Example 3)

A thermoplastic urethane elastomer containing 1 part of trimethyl octyl ammonium perchlorate was subjected to molding in a die. Thus, a conductive roller No. C-3 having the same shape as that of Example 1 was obtained. The roller was subjected to Evaluations (1) to (6). Table 8-2 shows the results.

(Comparative Example 4)

A thermosetting urethane ionomer containing 15 mol% of a sulfonic group was subjected to vulcanization molding in a die. Thus, a conductive roller No. C-4 having the same shape as that of Example 1 was obtained. The roller was subjected to Evaluations (1) to (6). Table 8-2 shows the results.

(Comparative Example 5)

A thermoplastic elastomer No. C-1 was obtained in the same manner as in the thermoplastic elastomer No. 1 except that in the synthesis of the thermoplastic elastomer No. 1 of Example 1, the polymer No. 1 was changed to the

polymer No. 19 and the blending quantity of concentrated sulfuric acid was changed to 4.39 g. The introduction ratio of a sulfonic group with respect to a double bond of a diene block was determined for the resultant thermoplastic elastomer No. C-1 in the same manner as in Example 1 by employing proton NMR.

In addition, the state of the microphase-separated structure of the thermoplastic elastomer No. C-1 was observed in the same manner as in Example 1. As a result, it was confirmed that the diene block component having a sulfonic group formed a spherical microphase-separated structure and a styrene block component served as a matrix for the structure. That is, a B block having an ion exchange group constituted a phase having a spherical structure and an A block as a non-ion conducting block constituted a matrix phase.

Table 8-1 shows the composition of the thermoplastic elastomer No. C-1 serving as an A-B-A type copolymer, the kind of microphase-separated structure constituted of the styrene block of the elastomer, and the introduction ratio of a sulfonic group with respect to a double bond of the diene block of the elastomer.

Further, a conductive roller No. C-5 was produced in the same manner as in Example 1 by using the thermoplastic elastomer No. C-1 and then subjected to Evaluations (1) to (6). Table 8-2 shows the results.

(Comparative Example 6)

A thermoplastic elastomer No. C-2 was synthesized in the same manner as in the thermoplastic elastomer No. 21 except that in the synthesis of the thermoplastic elastomer No. 21 of Example 21, the polymer No. 14 was changed to the polymer No. 20, its blending quantity was set to 84.02 g, and the blending quantity of the sultone represented by the formula (12) was changed to 6.96 g.

The introduction ratio of a sulfonic group with respect to the carboxyl group of the acrylic acid block was determined for the resultant thermoplastic elastomer No. C-1 in the same manner as in Example 1 by employing proton NMR.

In addition, the state of the microphase-separated structure of the thermoplastic elastomer No. C-2 was observed in the same manner as in Example 1. As a result, it was confirmed that the thermoplastic elastomer had a microphase-separated structure in which the acrylic acid block having a sulfonic group forms a spherical structure and a methyl methacrylate block constitutes a matrix for the structure. That is, the B block in the present invention constituted a phase having a spherical structure and the A block constituted a matrix phase.

Table 8-1 shows the composition of the thermoplastic elastomer No. C-2 serving as the A-B-A type copolymer of the present invention, the kind of microphase-separated structure constituted of the polystyrene block of the elastomer, and the introduction ratio of a sulfonic group with respect to a double bond of the diene block of the elastomer.

Further, a conductive roller No. C-5 was produced in the same manner as in Example 1 by using the thermoplastic elastomer No. C-2 and then subjected to Evaluations (1) to (6). Table 8-2 shows the results.

(Comparative Example 7)

The polymer No. 1 was prepared as a thermoplastic elastomer No. C-3.

The state of the microphase-separated structure of the thermoplastic elastomer No. C-3 was observed in the same manner as in Example 1. Table 8-2 shows the composition of the thermoplastic elastomer No. C-3 and the kind of microphase-separated structure of the elastomer. It should be noted that the value "0%" was described in the item of the introduction ratio of an ion exchange group in Table 8-2 because the thermoplastic elastomer No. C-3 was free of any ion exchange group.

In addition, a conductive roller No. 41 was produced in the same manner as in Example 1 by using the thermoplastic elastomer No. C-3 and then subjected to Evaluations (1) to (6). However, the conductive roller No. C-6 was not subjected to Evaluation (5) nor Evaluation (6) because the roller could not exert any function as a charging roller from an initial stage.

(Comparative Example 8)

A thermoplastic elastomer No. C-4 formed of a PMMA-b-PtBA-b-PMMA triblock copolymer was obtained without the performance of any deprotection reaction for the polymer No. 14.

The state of the microphase-separated structure of the thermoplastic elastomer No. C-4 was observed in the same manner as in Example 1. Table 8-2 shows the composition of the thermoplastic elastomer No. C-4 and the kind of microphase-separated structure of the elastomer. It should be noted that the value "0%" was described in the item of the introduction ratio of an ion exchange group in Table 8-2 because the thermoplastic elastomer No. C-4 was free of any ion exchange group.

In addition, a conductive roller No. 41 was produced in the same manner as in Example 1 by using the thermoplastic elastomer No. C-4 and then subjected to Evaluations (1) to (6). However, the conductive roller No. C-6 was

not subjected to Evaluation (5) nor Evaluation (6) because the roller could not exert any function as a charging roller from an initial stage.

Table 8-1

| Comparative Example | Thermoplastic elastomer No. | Type of structure of A block in microphase-separated structure | Composition of A-B-A type block j copolymer | | | | |
|---|---|---|---|---|---|---|---|
| | | | A block | | B block | | Introduction ratio of ion exchange group |
| | | | Material | Volume fraction (%) | Material | Volume fraction (%) | (Mol%) |
| 5 | C-1 | A block constitutes matrix phase | Styrene | 85 | Butadiene/ isoprene | 15 | 20 |
| 6 | C-2 | A block constitutes matrix phase | Methyl methacrylate | 85 | Acrylic acid | 15 | 20 |
| 7 | C-3 | *Spherical | Styrene | 15 | Butadiene/ isoprene | 85 | 0 |
| 8 | C-4 | *Spherical | Methyl methacrylate | 15 | Acrylic acid | 85 | 0 |

Table 8-2

| Comparative Example | Conductive roller No. | Evaluation (1) | Evaluation (2) | Evaluation for electrical resistance value | | | Image evaluation | |
|---|---|---|---|---|---|---|---|---|
| | | | | Evaluation (3) | Evaluation (6) | Variation ratio of electrical resistance value | Evaluation (4) | Evaluation (5) |
| | | (°) | (μm) | (Ω) | (Ω) | | | |
| 1 | C-1 | 57 | 2.5 | 892,857 | 9,428,571 | 956% | A | E (Horizontal streak) |
| 2 | C-2 | 58 | 2.2 | 806,451 | 6,768,548 | 739% | A | E (Horizontal streak) |
| 3 | C-3 | 61 | 2.6 | 773,195 | 11,814,432 | 1,428% | A | E (Horizontal streak) |
| 4 | C-4 | 60 | 2.7 | 714,285 | 9,814,285 | 1,274% | A | E (Horizontal streak) |
| 5 | C-5 | 95 | 2.4 | 500,000,000 | 1,174,500,000 | 135% | C (Horizontal streak) | F (Fogging) |
| 6 | C-6 | 96 | 2.5 | 322,580,645 | 1,031,290,322 | 220% | C (Horizontal streak) | F (Fogging) |
| 7 | C-7 | 60 | 2.4 | 854,000,000 ,000,000 | - | - | Not charged | - |
| 8 | C-8 | 62 | 2.4 | 12,300,000, 000,000 | - | - | Not charged | - |

This application claims the benefit of Japanese Patent Application No. 2011-082218, filed April 1, 2011.

**Reference Signs List**

| | |
|---|---|
| 1 | support |
| 2 | elastic layer |
| 3 | conductive elastic surface layer |
| 5 | photosensitive drum |
| 6 | charging member |
| 7 | recording medium |
| 8 | transfer roller |
| 9 | fixing portion |
| 10 | cleaning blade |
| 11 | exposure light |
| 12 | developing roller |
| 20 | power supply for charging |
| 22 | power supply for transfer |
| 30 | developing blade |
| 31 | developer container |
| 32 | columnar metal |
| 33 | bearing |
| 34 | power supply |
| 40 | conductive base layer member |

**Claims**

**1.** A conductive member for electrophotography, comprising:

a conductive support; and
a conductive elastic layer,
**characterized in that**
said elastic layer comprises an A-B-A type block copolymer;
where A block in said A-B-A type block copolymer comprises a non-ion conducting block, and B block therein comprises an ion conducting block having an ion exchange group;
wherein:

said A-B-A type block copolymer forms a microphase-separated structure; and
said microphase-separated structure comprises
a matrix phase formed of said B block, and
any one of structures selected from the group consisting of a spherical structure, a cylindrical structure, and a bicontinuous structure, wherein said structure is formed of said A block.

**2.** The conductive member for electrophotography according to claim 1, wherein:

said B block has at least one constitutional unit selected from the group consisting of constitutional units represented by the following formulae (1) to (3):

[Chem. 1]

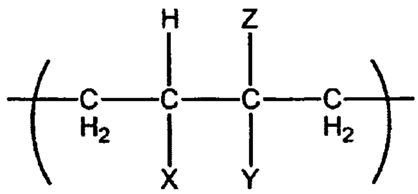

(1)

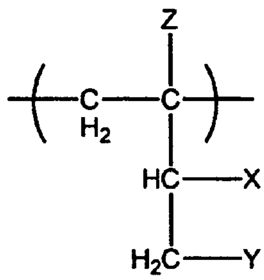

(2)

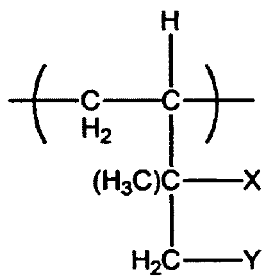

(3)

in the formulae (1) to (3),

X's each independently represent a hydroxyl group (-OH) or a sulfonic group ($-SO_3H$),
Y's each independently represent a hydroxyl group or a sulfonic group, and
Z's each independently represent a hydrogen atom or a methyl group, provided that when X represents a sulfonic group, Y represents a hydroxyl group, and when X represents a hydroxyl group, Y represents a sulfonic group.

**3.** The conductive member for electrophotography according to claim 1, wherein:

said B block has at least one constitutional unit selected from the group consisting of constitutional units represented by the following formulae (4) to (6):

[Chem. 2]

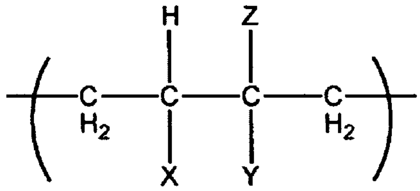

(4)

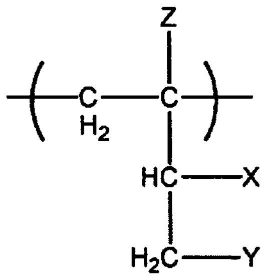

(5)

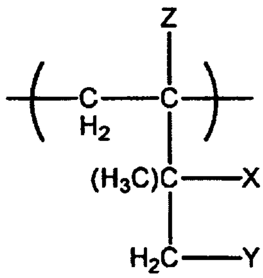

(6)

in the formulae (4) to (6),

X's each independently represent a carboxyl group or a hydrogen atom,
Y's each independently represent a carboxyl group or a hydrogen atom, and
Z's each independently represent a hydrogen atom or a methyl group, provided that when X represents a carboxyl group, Y represents a hydrogen atom, and when X represents a hydrogen atom, Y represents a carboxyl group or a hydrogen atom.

**4.** The conductive member for electrophotography according to claim 1, wherein:

said B block comprises a linear polymer block having constitutional units represented by the following formula (7) and the following formula (8):

[Chem. 3]

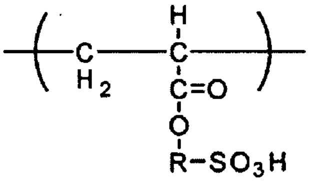

(7)

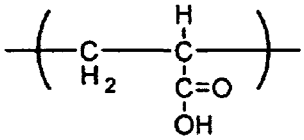

(8)

in the formula (7), R represents a divalent, saturated hydrocarbon group having 2 or more and 4 or less carbon atoms.

5. The conductive member for electrophotography according to claim 1, wherein:

said A block has at least one constitutional unit selected from the group consisting of constitutional units represented by the following formulae (9) to (11) :

[Chem. 4]

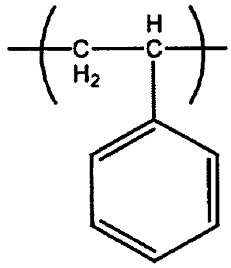

(9)

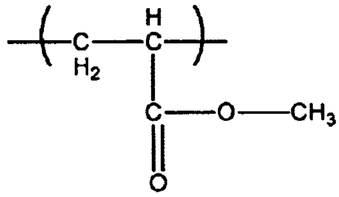

(10)

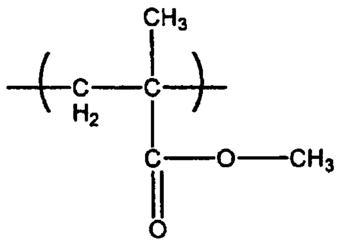

(11)

6. A process cartridge, which is removably mounted onto a main body of an electrophotographic apparatus, comprising the conductive member for electrophotography according to any one of claim 1 to 5 as at least one member selected from a charging member and a developing member.

7. An electrophotographic apparatus, comprising the conductive member for electrophotography according to any one of claim 1 to 5 as at least one member selected from a charging member and a developing member.

**Patentansprüche**

1. Leitfähiges Element für Elektrophotographie, das umfasst:

einen leitfähigen Träger; und
eine leitfähige elastische Schicht,
**dadurch gekennzeichnet, dass**
die elastische Schicht ein A-B-A-Typ Blockcopolymer umfasst;
wobei der A Block in dem A-B-A-Typ Blockcopolymer einen nichtionenleitenden Block umfasst, und der B Block darin einen ionenleitenden Block mit einer Ionenaustauschgruppe umfasst;
wobei:

das A-B-A-Typ Blockcopolymer eine mikrophasenseparierte Struktur bildet; und
die Mikrophasenseparierte Struktur
eine Matrixphase, die aus dem B Block gebildet ist, und
irgendeine Struktur, die aus der Gruppe ausgewählt ist, die aus einer sphärischen Struktur, einer zylindrischen Struktur und einer bikontinuierlichen Struktur besteht, wobei die Struktur aus dem A Block gebildet ist, umfasst.

2. Leitfähiges Element für Elektrophotographie nach Anspruch 1, wobei:

der B Block zumindest eine konstituierende Einheit aufweist, die aus der Gruppe ausgewählt ist, die aus durch die folgenden Formeln (1) bis (3) dargestellten konstituierenden Einheiten besteht:

[Chem. 1]

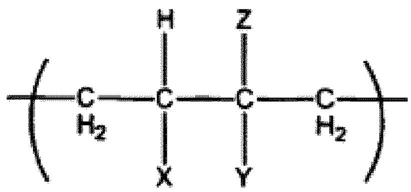

(1)

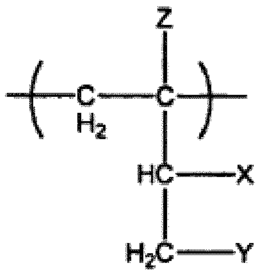

(2)

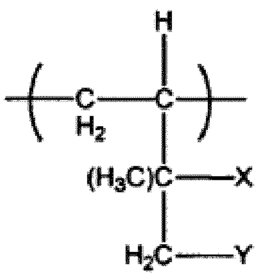

(3)

in den Formeln (1) bis (3),
stellen X jeweils unabhängig eine Hydroxylgruppe (-OH) oder eine Sulfongruppe ($-SO_3H$) dar,
stellen Y jeweils unabhängig eine Hydroxylgruppe oder eine Sulfongruppe dar, und
stellen Z jeweils unabhängig ein Wasserstoffatom oder eine Methylgruppe dar, vorausgesetzt dass, wenn X eine Sulfongruppe darstellt, Y eine Hydroxylgruppe darstellt, und, wenn X eine Hydroxylgruppe darstellt, Y eine Sulfongruppe darstellt.

3. Leitfähiges Element für Elektrophotographie nach Anspruch 1, wobei:

der B Block zumindest eine konstituierende Einheit aufweist, die aus der Gruppe ausgewählt ist, die aus durch die folgenden Formeln (4) bis (6) dargestellten konstituierenden Einheiten besteht:

[Chem. 2]

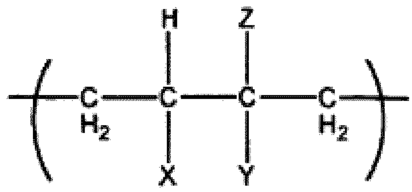

(4)

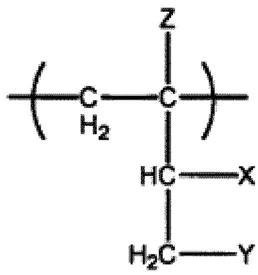

(5)

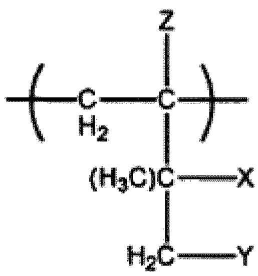

(6)

in den Formeln (4) bis (6),
stellen X jeweils unabhängig eine Carboxylgruppe oder ein Wasserstoffatom dar,
stellen Y jeweils unabhängig eine Carboxylgruppe oder ein Wasserstoffatom dar, und
stellen Z jeweils unabhängig ein Wasserstoffatom oder eine Methylgruppe dar, vorausgesetzt dass, wenn X eine Carboxylgruppe darstellt, Y ein Wasserstoffatom darstellt, und, wenn X ein Wasserstoffatom darstellt, Y eine Carboxylgruppe oder ein Wasserstoffatom darstellt.

**4.** Leitfähiges Element für Elektrophotographie nach Anspruch 1, wobei:

der B Block einen linearen Polymerblock mit durch die folgende Formel (7) und die folgende Formel (8) dargestellten konstituierenden Einheiten umfasst:

[Chem. 3]

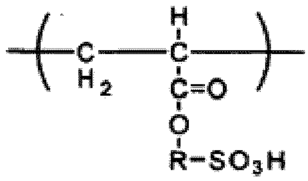

(7)

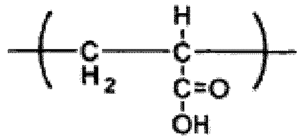

(8)

in der Formel (7), stellt R eine divalente, gesättigte Kohlenwasserstoffgruppe mit 2 oder mehr und 4 oder weniger Kohlenstoffatomen dar.

**5.** Leitfähiges Element für Elektrophotographie nach Anspruch 1, wobei:

der A Block zumindest eine konstituierende Einheit aufweist, die aus der Gruppe ausgewählt ist, die aus durch die folgenden Formeln (9) bis (11) dargestellten konstituierenden Einheiten besteht:

[Chem. 4]

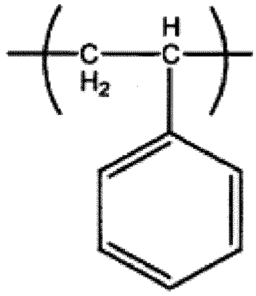

(9)

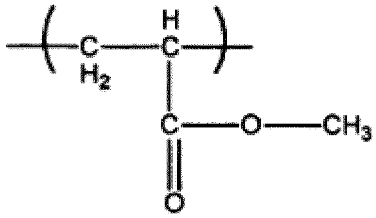

(10)

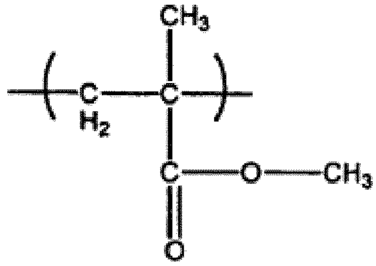

(11)

**6.** Prozesskartusche, welche entfernbar auf einen Hauptkörper eines elektrophotographischen Apparats montiert ist, die das leitfähige Element für Elektrophotographie gemäß einem der Ansprüche 1 bis 5 als zumindest ein Element, das aus einem Ladungselement und einem Entwicklungselement ausgewählt ist, umfasst.

**7.** Elektrophotographischer Apparat, der das leitfähige Element für Elektrophotographie gemäß einem der Ansprüche 1 bis 5 als zumindest ein Element, das aus einem Ladungselement und einem Entwicklungselement ausgewählt ist, umfasst.

## Revendications

**1.** Elément conducteur pour électrophotographie, comprenant :

un support conducteur ; et
une couche élastique conductrice,
caractérisé en ce qui :

ladite couche élastique comprend un copolymère séquencé de type A-B-A ;
où le bloc A dans ledit copolymère séquencé de type A-B-A comprend un bloc non conducteur d'ions et le bloc B dans ce copolymère comprend un bloc conducteur d'ions ayant un groupe échangeur d'ions ;
dans lequel :

ledit copolymère séquence de type A-B-A forme une structure à microphase séparée ; et

ladite structure à microphase séparée comprend
une phase de matrice formée dudit bloc B, et
l'une quelconque de structures choisies dans le groupe consistant en une structure sphérique, une structure cylindrique et une structure bicontinue, ladite structure étant formée dudit bloc A.

**2.** Elément conducteur pour électrophotographie suivant la revendication 1, dans lequel :

ledit bloc B possède au moins un motif constitutif choisi dans le groupe consistant en motifs constitutifs représentés par les formules (1) à (3) suivantes :

[Chem. 1]

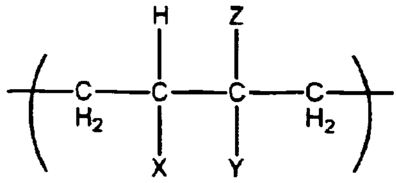

(1)

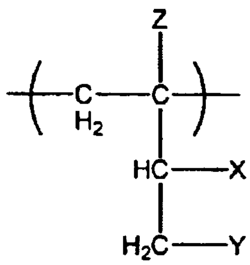

(2)

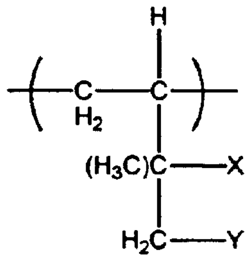

(3)

dans les formules (1) à (3),
les groupes X représentent chacun indépendamment un groupe hydroxyle (-OH) ou un groupe sulfonique ($-SO_3H$),
les groupes Y représentent chacun indépendamment un groupe hydroxyle ou un groupe sulfonique, et
les groupes Z représentent chacun indépendamment un atome d'hydrogène ou un groupe méthyle, sous réserve que, lorsque X représente un groupe sulfonique, Y représente un groupe hydroxyle et, lorsque X représente un groupe hydroxyle, Y représente un groupe sulfonique.

**3.** Elément conducteur pour électrophotographie suivant la revendication 1, dans lequel :

ledit bloc B possède au moins un motif constitutif choisi dans le groupe consistant en motifs constitutifs représentés par les formules (4) à (6) suivantes :

[Chem. 2]

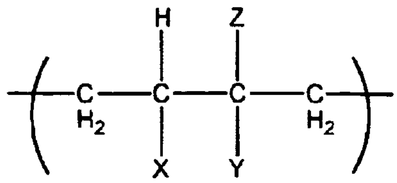

(4)

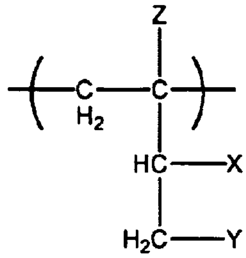

(5)

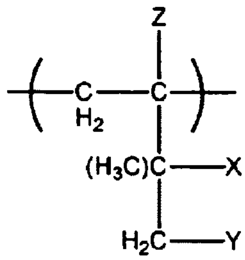

(6)

dans les formules (4) à (6),
les groupes X représentent chacun indépendamment un groupe carboxyle ou un atome d'hydrogène,
les groupes Y représentent chacun indépendamment un groupe carboxyle ou un atome d'hydrogène, et
les groupes Z représentent chacun indépendamment un atome d'hydrogène ou un groupe méthyle, sous réserve que, lorsque X représente un groupe carboxyle, Y représente un atome d'hydrogène et, lorsque X représente un atome d'hydrogène, Y représente un groupe carboxyle ou un atome d'hydrogène.

**4.** Elément conducteur pour électrophotographie suivant la revendication 1, dans lequel :

ledit bloc B comprend un bloc polymère linéaire ayant des motifs constitutifs représentés par la formule (7) suivante et la formule (8) suivante :

[Chem. 3]

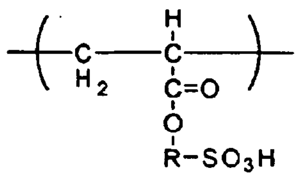

(7)

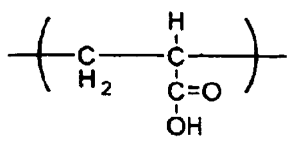

(8)

dans la formule (7), R représente un groupe hydrocarboné saturé divalent ayant 2 ou plus de 2 à 4 ou moins de 4 atomes de carbone.

**5.** Elément conducteur pour électrophotographie suivant la revendication 1, dans lequel :

ledit bloc A possède au moins un motif constitutif choisi dans le groupe consistant en motifs constitutifs représentés par les formules (9) à (11) suivantes :

[Chem. 4]

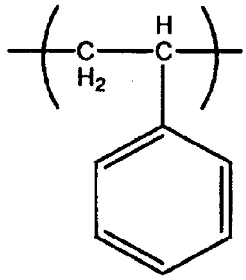

(9)

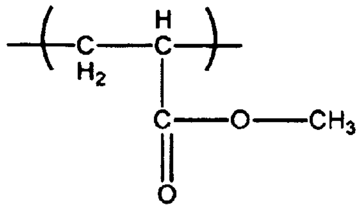

(10)

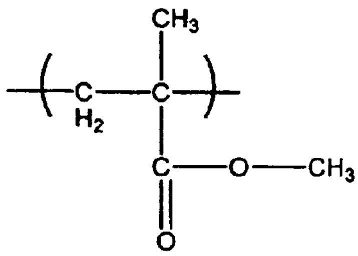

(11)

6. Cartouche de traitement, qui est montée de manière amovible sur un corps principal d'un appareil électrophotographique, comprenant l'élément conducteur pour électrophotographie suivant l'une quelconque des revendications 1 à 5 en tant qu'au moins un élément choisi entre un élément de charge et un élément de développement.

7. Appareil électrophotographique, comprenant l'élément conducteur pour électrophotographie suivant l'une quelconque des revendications 1 à 5 en tant qu'au moins un élément choisi entre un élément de charge et un élément de développement.

FIG. 1A

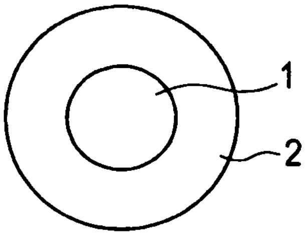


FIG. 1C

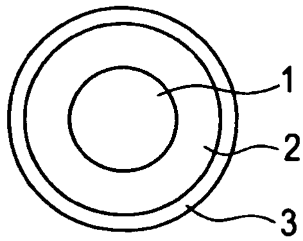


FIG. 1B

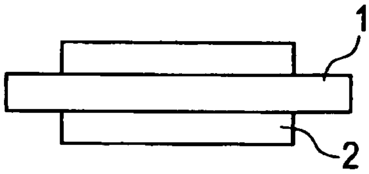


FIG. 1D

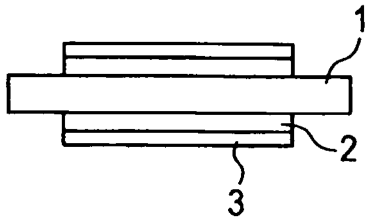


FIG. 2

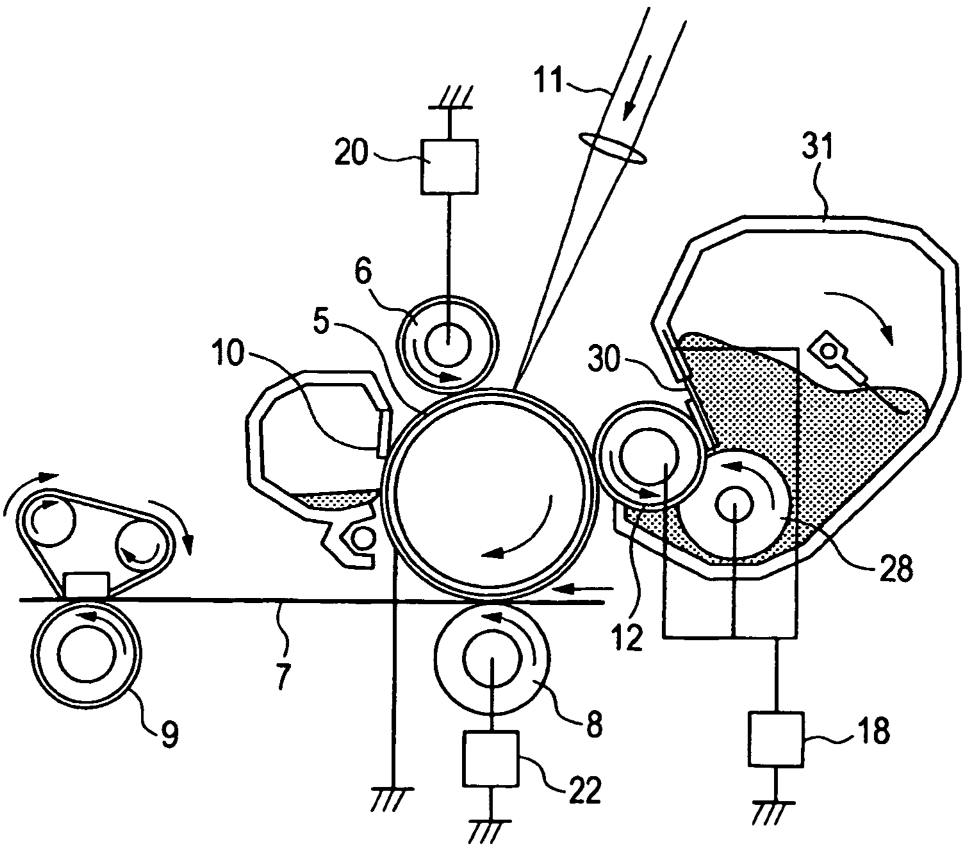

*FIG. 3*

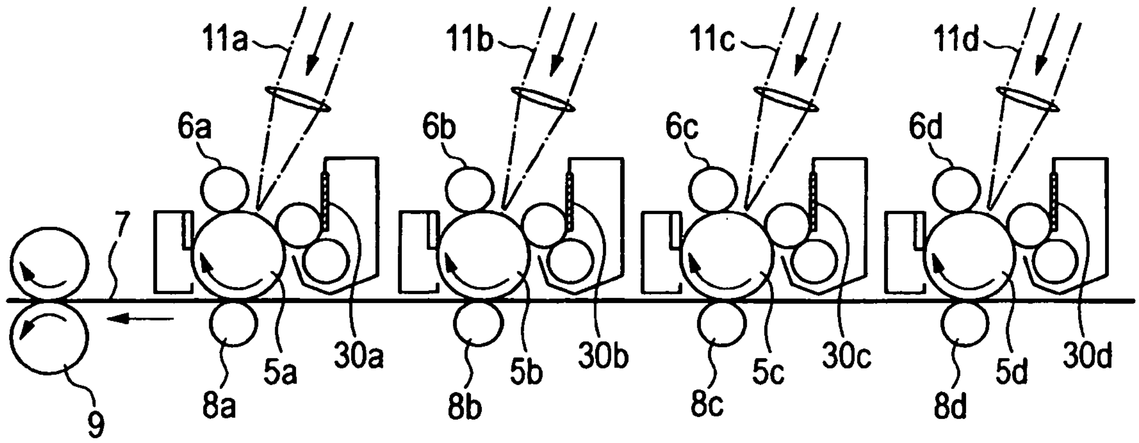
11a
11b
11c
11d
6a
6b
6c
6d
7
5a
5b
5c
5d
30a
30b
30c
30d
8a
8b
8c
8d
9

FIG. 4A

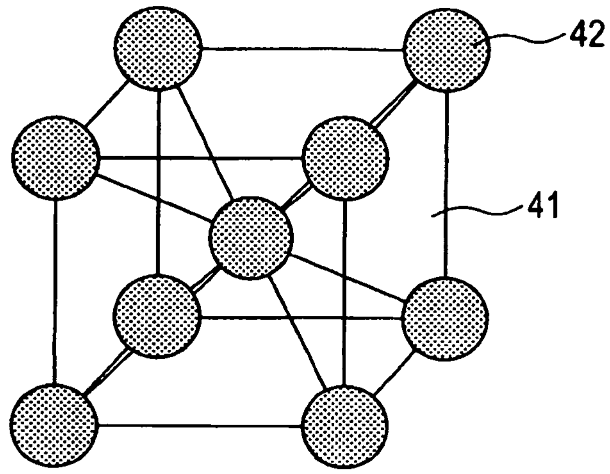


FIG. 4B

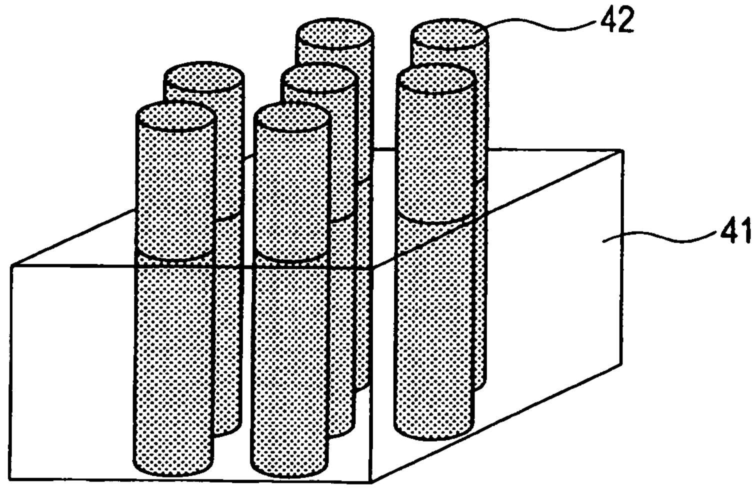

FIG. 5A

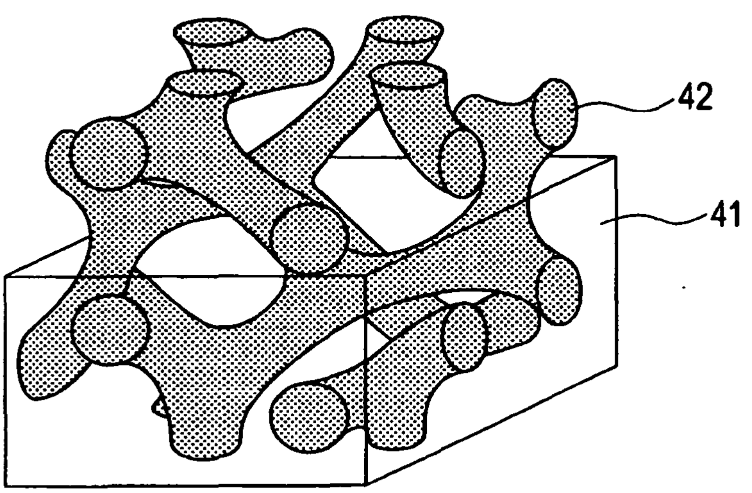


FIG. 5B

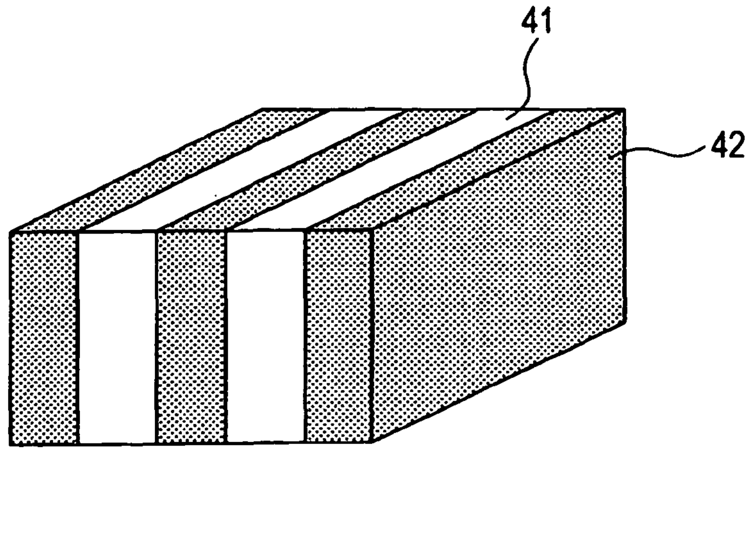

FIG. 6A

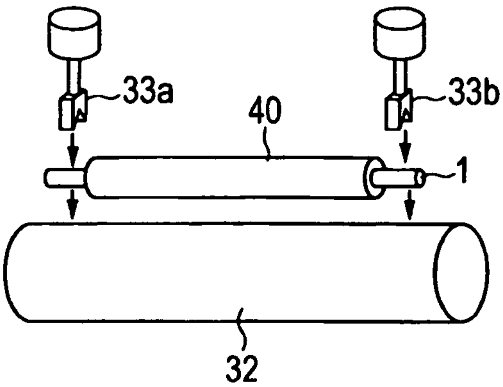


FIG. 6B

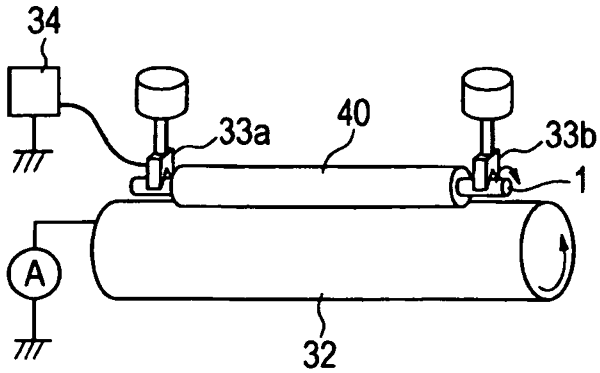

FIG. 7A

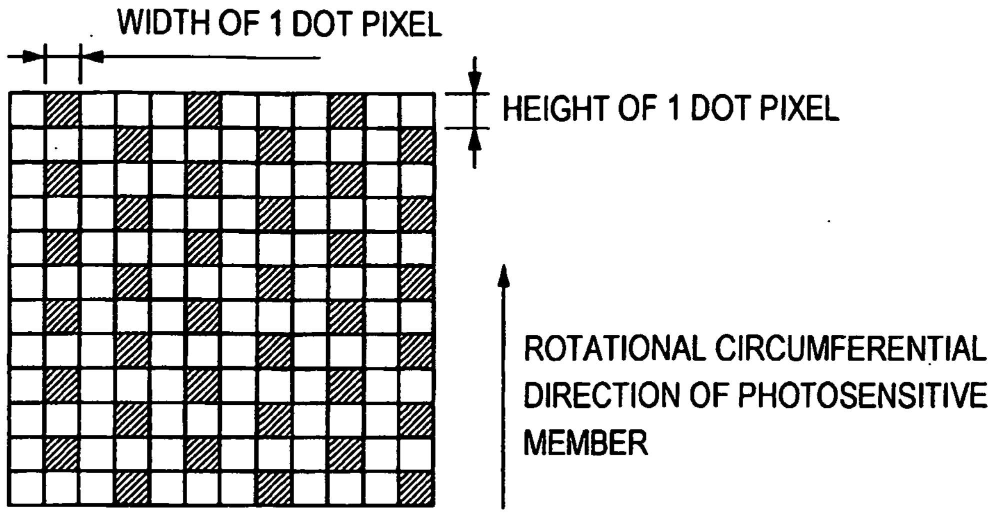


FIG. 7B

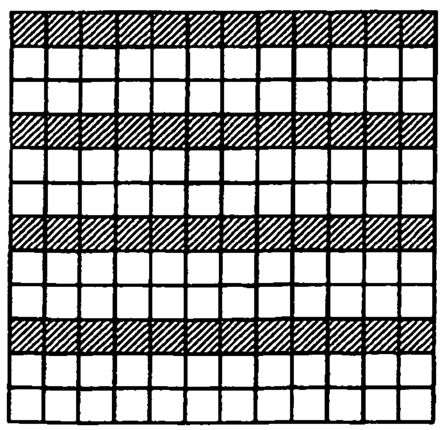

FIG. 7C

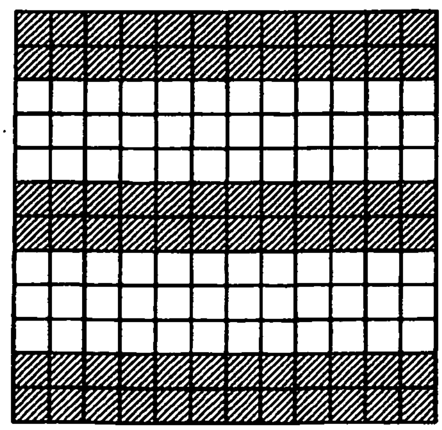

FIG. 8

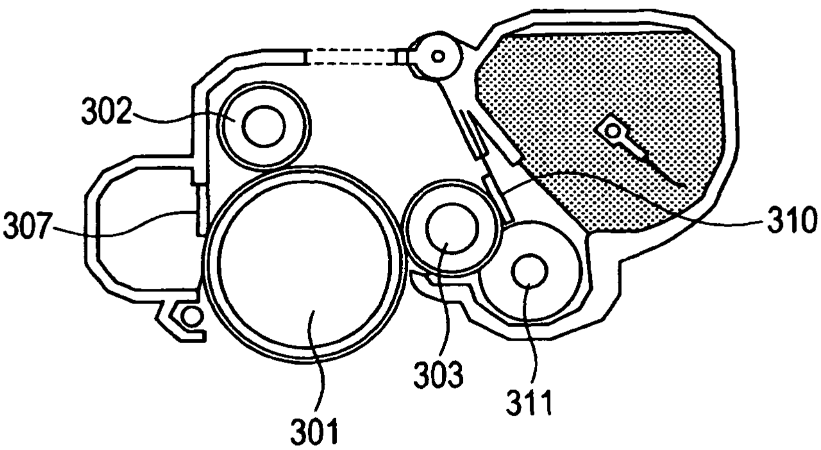

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006189894 A
- JP 2011082218 A